# EUROPEAN PATENT APPLICATION

(11) **EP 4 198 152 A1**
(43) Date of publication of application: **21.06.2023**
(21) Application number: 21383156.3
(22) Date of filing: 17.12.2021
(51) Int. Cl.: C22B 3/38, C22B 3/44, C22B 59/00

(54) **RECOVERY OF RARE EARTH ELEMENTS FROM ACIDIC MINE WATER**

(71) Applicant: Universitat Politècnica De Catalunya, 08034 Barcelona (ES)
(72) Inventor: LÓPEZ RODRÍGUEZ, Julio, 08034 BARCELONA (ES); CORTINA PALLÁS, José Luis, 08034 BARCELONA (ES); GIBERT AGULLÓ, Oriol, 08034 BARCELONA (ES); VALDERRAMA ANGEL, Cesar A., 08034 BARCELONA (ES)
(74) Representative: Ungria López, Javier

(57) **Abstract**

The present invention relates to a method for the recovery of rare earth elements (REEs) from acidic mine waters (AMWs), wherein the method comprises (a) depleting the AMWs of alkaline earth metals of group 2, transition metals of groups 4-12, other metals of groups 13-16 and metalloids of groups 13-16; (b) extracting the REEs using a selective ligand impregnated polymeric support (SL-IPS), wherein the SL-IPS comprises an organo-phosphorus acidic extractant selected from the group consisting of an alkyl phosphinic acid, an alkyl phosphonic acid, and an alkyl phosphoric acid; and (c) eluting the REEs from the SL-IPS with a strong acid solution, at a pH between 0 and 0.5.

## Description

### FIELD OF THE INVENTION

The invention relates to the field of extracting valuable metals such as rare earth elements (REEs) from acid-leaching slurries or solutions. In particular, the invention relates to the recovery of REEs from acidic mine water (AMW).

### BACKGROUND

Spain contains one of the major polysulphide deposits worldwide, known as the Iberian Pyrite Belt. In this area, there are several open-pit mines; most of them abandoned and containing several hm³ of acidic mine water (AMW), which is one of the main pollutants generated during mining activities. AMW generation, release, mobility and attenuation involve complex processes governed by a combination of physical, chemical, and biological factors. These waters are characterized by a very extreme pH and high pollution levels. Under atmospheric conditions, sulphide minerals will oxidize when exposed to water and oxygen, such that acid waste containing large amounts of sulphate and toxic metals is released into the water. Because mining activities are continuous, the emission of AMW does not stop. When these waters are released into ecosystems, AMW pollutes water sources, and it also affects remote environments due to water flow and soil infiltration. This should be prevented, since acute exposure to high concentrations of metals is known to directly kill organisms, while long-term exposure to metals can cause dysplasia and deformities.

As an example, the open pit from the Aznalcóllar mine contains AMWs with a pH of about 2.6, due to the dissolved H₂SO₄. Also, these AMWs include some radioactive (U, Th), toxic (As, Se), and heavy metal elements (Fe Mn, Zn, rare earth elements (REEs), etc...). These elements are not only a threat to human health, but they can also cause significant damage to plants, animals, and soil. It has been found that AMWs from the Iberian Pyrite Belt carry a total content of REEs up to 10 g/m³, which is higher than the concentration in natural waters (in the order of 1.50·10⁻⁵ g/m³). According to European and national environmental policies, AMWs must be treated properly prior to their release in order to avoid any environmental damage. It should be noted that some of the contaminants in AMWs are metals with high added value (e.g., Rare Earth Elements, or REEs). In fact, the recovery of contaminants such as REEs can be of economic interest.

The total global reserves of REEs resources are about 120 million tons worldwide, of which China's reserves are 44 million tons (accounting for about 37.8%), Vietnam's reserves are 22 million tons (18.9%), followed by Brazil (about 18.9%) and Russia (about 10.3%). There are no significant REEs deposits in the European Union (EU), which means that these countries need to import large amounts of these metals, mainly from China. The dependence from China has prompted the EU to adopt policies to recover REEs from secondary sources, such as AMWs.

Recovery of REEs from acidic waters such as AMWs (wherein the REEs are present at concentrations in the order of g/m³) can only be achieved by means of highly selective sorption processes. Since typical polymeric Ion-exchange (IX) resins cannot provide the required separation factors needed to recover REEs from AMWs, chelating resins containing weak functional groups of polymeric sorbents prepared by physical impregnation of selective extractants onto polymeric supports have been developed (J.L. Cortina, et al., Solvent impregnated resins containing di-(2-ethylhexyl) phosphoric acid. i. preparation and study of the retention and distribution of the extractant on the resin, Solvent Extr. Ion Exch. 12 (1994) 349-369). The mechanisms associated with those chelating functional groups or liquid metal extractants involve coordination reactions with metal ions to form stable structures similar to that of small molecule chelates. Therefore, compared with ion exchange resins, chelating resins have stronger binding force with metal ions and higher selectivity. Therefore, they can be widely used in the recovery and separation of various metal ions.

Several studies have reported the possibility of treating AMWs using ion-exchange processes but most have centred on salinity removal (e.g. high sulphate content), while only a few focus specifically on metal recovery:
- US 2021/0187492 A1 discloses extractants supported on a polymer resin for the direct extraction of valuable metals such as REEs from acid-leaching slurries or solutions. US 2021/0187492 A1 particularly explains the use of di-(2-ethylhexyl) phosphoric acid, supported on polymer resins, wherein the polymer resins may be non-functional or have functional groups such as sulphonic acid, carboxylic acid, iminodiacetic acid, phosphoric acid, or amines.
- Qiang Fu et al. ("On-line preconcentration with a novel alkyl phosphinic acid extraction resin coupled with inductively coupled plasma mass spectrometry for determination of trace rare earth elements in seawater", Talanta 72 (2007) 1248-1254) describes the use of an alkyl phosphinic acid resin (APAR) in the concentration of rare earth elements (REEs) present in seawater, such that contamination of coastal seawater with trace REEs can be accurately determined. In the specific examples of Qiang Fu et al., the APAR is supported on styrene-divinylbenzene copolymer beads. Qiang Fu et al. describe that the adsorption mechanism of REEs on the APAR is supposed to be similar to the extraction mechanism of REEs with bis-(1,1,3,3-tetramethylbutyl) phosphinic acid (HMBP). Qiang Fu et al. also explain that the APAR can adsorb, besides REEs, other metals such as AI(III), Ga(III), Pb(II), Bi(III), Fe(III), Co(II), Ni(II), Zn(II), Cd(II), Sc(III), Hg(II), U(VI) and Th(IV).

- Chávez, G. ("Recovery of rare earth elements from acid mine waters by using phosphate based precipitation processes", bachelor's degree thesis, Escola Tècnica Superior d'Enginyeria Industrial de Barcelona) evaluates the use of an ion exchange resin in order to increase the concentration of REEs present in acid mine waters (AMWs) for purification in phosphate based precipitation methods. This document teaches that it is desirable to proceed with the REE recovery method after removal of Fe, by total oxidation of Fe(II) to Fe(III) and precipitation as Fe(III) hydroxides by using a strong alkaline reagent (e.g. NaOH, CaO, and MgO).

However, there is still a need for effective recovery methods that can extract value from the contaminants present in acidic mine waters (AMWs), while at the same time solving the significant environmental problem caused by acidic runoff resulting from mining activities.

### SUMMARY OF THE INVENTION

The inventors have identified that acidic mine waters (AMWs) may be sequentially depleted of alkaline earth metals of group 2, transition metals of groups 4-12, other metals of groups 13-16 and metalloids of groups 13-16 by first removing iron (III) and aluminium (III) as metal hydroxides and subsequently removing the remaining metals as metal sulphides, under conditions wherein the precipitation of rare earth elements (REEs) is avoided, such that said REEs can be selectively extracted using a selective ligand impregnated polymeric support (SL-IPS) in a more efficient manner. The SL-IPS comprises an organo-phosphorus acidic extractant selected from the group consisting of an alkyl phosphinic acid, an alkyl phosphonic acid, and an alkyl phosphoric acid.

Thus, in a first aspect the invention refers to a method for the recovery of rare earth elements (REEs) from acidic mine waters (AMWs), wherein the method comprises:
a) depleting the AMWs of alkaline earth metals of group 2, transition metals of groups 4-12, other metals of groups 13-16 and metalloids of groups 13-16;
b) extracting the REEs using a selective ligand impregnated polymeric support (SL-IPS), wherein the SL-IPS comprises an organo-phosphorus acidic extractant selected from the group consisting of an alkyl phosphinic acid, an alkyl phosphonic acid, and an alkyl phosphoric acid; and
c) eluting the REEs from the SL-IPS with a strong acid solution, at a pH between 0 and 0.5.

### BRIEF DESCRIPTION OF THE FIGURES

- Figure 1: Proposed treatment scheme for the recovery of REEs in AMWs.
- Figure 2: Precipitation trends for (a) Major elements, (b) Other elements, and (c) REEs in AMW, expressed as concentration ratio (C/C₀) as a function of pH.
- Figure 3: Sorption curves (C/C₀) for (a) Major elements, (b) Other elements, and (c) REEs as a function of bed volume (BV) operating at 2.5 BV/h.
- Figure 4: Evolution of pH and C/C₀ for Zn as a function of the bed volume (BV).
- Figure 5: Elution curves for (a) Major elements, (b) Other elements, and (c) REEs as a function of bed volume (BV) operating at 1 BV/h using H₂SO₄.
- Figure 6: Percentage of elements that precipitated using H₂SO₄ at pH 1 for (a) metals in solution, and (b) REEs.
- Figure 7: Removal efficiency for (a) Major elements, (b) Other elements, and (c) REEs in AMW, expressed as percentage removal as a function of NaHS concentration, at pH 2.
- Figure 8: Sorption curves (C/C₀) for (a) Major elements, (b) Other elements, and (c) REEs as a function of bed volume (BV) operating at 2.5 BV/h.
- Figure 9: Evolution of pH as a function of the bed volume (BV).
- Figure 10: Elution curves for (a) Major elements, (b) Other elements, and (c) REEs as a function of BV operating at 1 BV/h using H₂SO₄.
- Figure 11: Percentage of elements that precipitated using oxalic acid (H₂C₂O₄) together with magnesium oxide (MgO) as solid, or ammonia (NH₃, 30% wt.) as liquid, for (a) metals in solution, and (b) REEs.
- Figure 12: Morphology analysis of the precipitates collected after the precipitation with oxalic acid using (a) MgO and (b) NH₃.

### DETAILED DESCRIPTION

As indicated above, the inventors have identified that acidic mine waters (AMWs) may be sequentially depleted of alkaline earth metals of group 2, transition metals of groups 4-12, other metals of groups 13-16 and metalloids of groups 13-16 by first removing iron (III) and aluminium (III) as metal hydroxides and subsequently removing the remaining metals as metal sulphides, under conditions where the precipitation of rare earth elements (REEs) is avoided, such that said REEs can be selectively extracted using a selective ligand impregnated polymeric support (SL-IPS) in a more efficient manner, wherein the SL-IPS comprises an organo-phosphorus acidic extractant selected from the group consisting of an alkyl phosphinic acid, an alkyl phosphonic acid, and an alkyl phosphoric acid.

Thus, in a first aspect the invention refers to a method for the recovery of rare earth elements (REEs) from acidic mine waters (AMWs), wherein the method comprises:
a) depleting the AMWs of alkaline earth metals of group 2, transition metals of groups 4-12, other metals of groups 13-16 and metalloids of groups 13-16;
b) extracting the REEs using a selective ligand impregnated polymeric support (SL-IPS), wherein the SL-IPS comprises an organo-phosphorus acidic extractant selected from the group consisting of an alkyl phosphinic acid, an alkyl phosphonic acid, and an alkyl phosphoric acid; and
c) eluting the REEs from the SL-IPS with a strong acid solution, at a pH between 0 and 0.5.

In the context of the invention, the expression "rare earth elements" (and its abbreviation "REEs") refers to a group of 17 metals including the 15 lanthanide elements in the periodic table: lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), and two elements related to lanthanides: scandium (Sc), and yttrium (Y). According to the electronic layer structure and physical and chemical properties, REEs can be divided into light REEs (La, Ce, Pr, Nd, Pm, Sm, Eu) and heavy REEs (Gd, Tb, Dy, Ho, Er, Tm, Yb, Lu, Sc, Y). REEs are widely used in many fields as raw materials for the manufacturing of advanced equipment, new energy sources, emerging industries, electronics, environmental protection and agriculture, and other high-tech industries.

As used herein, the term "acidic mine water" or "acid mine water" ("AMW"), also known as "acid mine drainage", "acid and metalliferous drainage" (AMD), or "acid rock drainage" (ARD) refers to the outflow of acidic water from metal mines or coal mines. Acidic mine water can also occur naturally in specific environmental conditions as part of a rock weathering process. However, the process is exacerbated by large-scale earth disturbances of human origin, which are characteristic of mining activities and/or other large construction operations, usually within the context of rocks containing an abundance of sulphide minerals. Areas where the earth has been disturbed may be affected by acid rock drainage. In particular, acidic mine water (AMW) is one of the main pollutants generated during mining activates. AMW generation, release, mobility and attenuation involve complex processes governed by a combination of physical, chemical, and biological factors. These waters are characterised by a very extreme pH and high pollution levels. In the context of the instant invention, the AMW carries a significant amount of REEs. In particular embodiments, the AMW has a total content of REEs of up to at least 20 g/m³, of up to at least 19 g/m³, of up to at least 18 g/m³, of up to at least 17 g/m³, of up to at least 16 g/m³, of up to at least 15 g/m³, of up to at least 14 g/m³, of up to at least 13 g/m³, of up to at least 12 g/m³, or of up to at least 11 g/m³ of up to at least 10 g/m³, of up to at least 9 g/m³, of up to at least 8 g/m³, of up to at least 7 g/m³, of up to at least 6 g/m³, of up to at least 5 g/m³, of up to at least 4 g/m³, of up to at least 3 g/m³, of up to at least 2 g/m³, or of up to at least 1 g/m³. In particular embodiments, the AMW has a pH of about 3.5 or less, of about 4.0 or less, or of about 3.8 or less, of about 3.6 or less, of about 3.4 or less, or of about 3.2 or less, of about 3.0 or less, of about 2.8 or less, or of about 2.6 or less.

In the context of the instant invention, the term "recovering" or "recovery" when referring to the REEs that are present in AMWs is meant to define a step of purification of said REEs where the yield of the REEs in the final purified product is of at least 10%, of at least 20%, of at least 30%, of at least 40%, of at least 50%, of at least 60%, of at least 70%, of at least 75%, of at least 80%, of at least 85%, of at least 90%, of at least 95%, of at least 98%, of at least 99%, or of 100% with respect to the concentration of the REEs in the AMWs. Thus, if the concentration of REEs in the AMWs is established as the reference value, the concentration of REEs in the final purified product can be compared with this reference value, and thus be assigned a level of "increased". For example, an increase in concentration above the reference value of at least 1.1-fold, 1.5-fold, 5-fold, 10-fold, 20-fold, 30-fold, 40-fold, 50-fold, 60-fold, 70-fold, 80-fold, 90-fold, 100-fold or even more compared with the reference value is considered as "increased" concentration.

For the avoidance of doubt, the term "alkaline earth metals of group 2" refers to beryllium (Be), magnesium (Mg), calcium (Ca), strontium (Sr), barium (Ba), and radium (Ra); the term "transition metals of groups 4-12" refers to titanium (Ti), zirconium (Zr), and hafnium (Hf), vanadium (V), niobium (Nb), and tantalum (Ta), chromium (Cr), molybdenum (Mo), and tungsten (W), manganese (Mn), technetium (Tc), and rhenium (Re), iron (Fe), ruthenium (Ru), and osmium (Os), cobalt (Co), rhodium (Rh), and iridium (Ir), nickel (Ni), palladium (Pd), and platinum (Pt), copper (Cu), silver (Ag), and gold (Au), zinc (Zn), cadmium (Cd), and mercury (Hg); the term "other metals of groups 13-16" refers to aluminium (Al), gallium (Ga), indium (In), thallium (TI), tin (Sn), lead (Pb), and bismuth (Bi); and the term "metalloids of groups 13-16" refers to boron (B), silicon (Si), germanium (Ge), arsenic (As), antimony (Sb), tellurium (Te), and polonium (Po). Periodic table group numbers are as per modern IUPAC numbering (Fluck, E., "New Notations in the Periodic Table", Pure Appl. Chem. 60 (3): 431-436, 1988).

As used herein, the term "depleting" when referring to alkaline earth metals of group 2, transition metals of groups 4-12, other metals of groups 13-16 and metalloids of groups 13-16 is meant to define a step of removing said elements, such that each element is found in the final product at a concentration of less than 70%, of less than 60%, of less than 50%, of less than 40%, of less than 30%, of less than 25%, of less than 20%, of less than 15%, of less than 10%, of less than 5%, of less than 2%, of less than 1%, or of 0% with respect to the concentration of said element in the AMWs. Thus, if the concentration of the element (e.g., Fe, Al, or Zn) in the AMWs is established as the reference value, the concentration of said element in the final purified product can be compared with this reference value, and thus be assigned a level of "decreased". For example, a decrease in concentration levels below the reference value of at least 0.9-fold, 0.75-fold, 0.2-fold, 0.1 -fold, 0.05-fold, 0.025-fold, 0.02-fold, 0.01 -fold, 0.005-fold or even less compared with reference value is considered as "decreased" concentration level.

In the context of the instant invention, the term "extracting" or "extraction" when referring to the REEs that are present in AMWs that have been depleted of alkaline earth metals of group 2, transition metals of groups 4-12, other metals of groups 13-16 and metalloids of groups 13-16 is meant to define a step of purification of said REEs where the yield of the REEs in the final product, is of at least 10%, of at least 20%, of at least 30%, of at least 40%, of at least 50%, of at least 60%, of at least 70%, of at least 75%, of at least 80%, of at least 85%, of at least 90%, of at least 95%, of at least 98%, of at least 99%, or of 100% with respect to the concentration of the REEs in the AMWs that have been depleted of alkaline earth metals of group 2, transition metals of groups 4-12, other metals of groups 13-16 and metalloids of groups 13-16. Thus, if the concentration of REEs in the AMWs that have been depleted of alkaline earth metals of group 2, transition metals of groups 4-12, other metals of groups 13-16 and metalloids of groups 13-16 is established as the reference value, the concentration of REEs in the final purified product can be compared with this reference value, and thus be assigned a level of "increased". For example, an increase in concentration above the reference value of at least 1.1-fold, 1.5-fold, 5-fold, 10-fold, 20-fold, 30-fold, 40-fold, 50-fold, 60-fold, 70-fold, 80-fold, 90-fold, 100-fold or even more compared with the reference value is considered as "increased" concentration.

As used herein, the expression "selective ligand impregnated polymeric support" (SL-IPS) refers to reagents that are comprised of cross-linked polymer networks (i.e., polymeric support) wherein the polymer networks have been modified with ligands capable of selective metal ion complexation (i.e., extractants). As generally known in the field of solvent extraction, an "extractant" is an active organic reagent that forms an extractable coordination complex with the metal. In the context of the invention, the extractant is an organo-phosphorus acidic extractant selected from the group consisting of an alkyl phosphinic acid, an alkyl phosphonic acid, and an alkyl phosphoric acid.

In the context of the present invention, the expression "alkyl phosphinic acid" refers to alkyl derivatives of phosphinic acid, also known as hypophosphorous acid (CAS Number 6303-21-5). In the context of the present invention, the expression "alkyl phosphonic acid" refers to alkyl derivatives of phosphonic acid (CAS Number 13598-36-2), also known as phosphorous acid (CAS Number 13598-36-2). In the context of the present invention, the expression "alkyl phosphoric acid" refers to alkyl derivatives of phosphoric acid, also known as ortophosphoric acid or phosphoric (V) acid (CAS Number 7664-38-2). As used herein, the term "alkyl" refers to aliphatic, linear, or branched chains having from 1 to 22 carbon atoms, e.g., methyl, ethyl, n-propyl, i-propyl, n-butyl, tert-butyl, sec-butyl, n-pentyl, n-hexyl, etc. The alkyl group preferably has between 2 and 20 carbon atoms, between 3 and 18 carbon atoms, between 4 and 16 carbon atoms, between 5 and 14 carbon atoms, between 6 and 12 carbon atoms, between 7 and 10 carbon atoms, or between 8 and 9 carbon atoms.

In a particular embodiment, the organophosphorus acidic extractant is an alkyl phosphinic acid. In more particular embodiments, the organo-phosphorus acidic extractant is an alkyl phosphinic acid selected from the group consisting of Dimethylphosphinic acid; Di-n-propylphosphinic acid; Diisopropylphosphinic acid; Di-n-butylphosphinic acid; Di-isobutylphosphinic acid; Di-n-pentylphosphinic acid; Di-n-hexylphosphinic acid; Di-n-heptylphosphinic acid; Di-n-octylphosphinic acid; Bis(2-ethylhexyl)phosphinic acid; Di-n-nonylphosphinic acid; Di-n-decylphosphinic acid; Di-n-dodecylphosphinic acid; Di-n-tetradecylphosphinic acid; Di-n-hexadecylphosphinic acid; Di-n-eicosylphosphinic acid; Bis(2,4,4-trimethylpentyl)phosphinic acid; (2,4,4-Trimethylpentyl)cyclohexylphosphinic acid; (2,4,4-Trimethylpentyl)octylphosphinic acid; Dicyclopentylphosphinic acid; Dicyclohexylphosphinic acid; Dicyclooctylphosphinic acid; Cyclohexyl-n-butylphosphinic acid; Cyclopentyl-n-dodecylphosphinic acid; Cyclooctylethylphosphinic acid; 2,4,6-Triisopropyl-1,3,5-dioxaphosphorinane-5-hydroxy-5-oxide phosphinic acid; Cyclohexylphenylphosphinic acid; Cyclo-p-tolylphosphinic acid; Cyclohexyl-1-hydroxycyclohexylphosphinic acid; Bis(2-methyl-1-hydroxypentyl)phosphinic acid; Cyclopentyl-1-hydroxycyclopentylphosphinic acid; 1-Methylpentyl-1-hydroxy-1-methylpentylphosphinic acid; (1-Hydroxy-1-methylethyl) isopropylphosphinic acid; and combinations thereof. In a particular embodiment, the alkyl phosphinic acid is bis-(2,4,4-trimethylpentyl) phosphinic acid.

As used herein, the term "polymeric support" refers to a resin or polymer that acts as a medium for an extractant. In certain embodiments, the polymeric support is an ionic exchange resin. In particular embodiments of the invention, the polymeric support is selected from the group consisting of cross-linked polystyrene divinyl benzene, polystyrene sulfonate, polyAMPS, polyAPTAC, polyMAPTAC, polyethylenimine, and combinations thereof. In a particular embodiment, the polymeric support is cross-linked polystyrene divinyl benzene, also known as styrene-divinylbenzene copolymer (CAS Number 9003-70-7).

In the context of the instant invention, the term "eluting" or "elution" when referring to the REEs that are retained in the SL-IPS is meant to define the process of obtaining said REEs from the SL-IPS by washing with a suitable solvent (i.e., similarly as it is done in the washing of loaded ion-exchange resins to remove captured ions). In this step of the method of the invention, the REEs of interest are generally forming a complex with the organo-phosphorus acidic extractant in the SL-IPS. Based on their specific composition, the organo-phosphorous acidic extractants can have varying affinities to "hold" onto the REEs. Elution in this context is the process of removing the REEs from the organo-phosphorus acidic extractant in the SL-IPS by running a suitable solvent, called an "eluent", past the REE/ organo-phosphorous acidic extractant complex. As the solvent molecules "elute", or travel down through the SL-IPS column, they can either pass by the REE/ extractant complex or they can displace the REE from the complex. After the solvent molecules displace the REEs, the REEs can be carried out of the column for further processing (i.e., analysis, precipitation, etc.). When several, different elements are retained within the SL-IPS (e.g., various REEs and/ or contaminants), they may be displaced by the solvent at different elution times. The "elution time" of a solute is the time between the start of the separation (the time at which the solute enters the column) and the time at which the solute elutes. In the same way, the elution volume is the volume of eluent required to cause elution. Thus, predicting and controlling the order of elution is a key aspect of the purification method.

In the method of the invention, the step of eluting the REEs from the SL-IPS is performed with a strong acid solution, at a pH below 1.0. In a particular embodiment, the pH is below 1.0, below 0.9, below 0.8, below 0.7, below 0.6, below 0.5, below 0.4, below 0.3, below 0.2, below 0.1, or below 0.0. In particular embodiments, the pH is between 1.0 and -1.0, between 0.8 and -0.8, between 0.5 and -0.5, or between 0.2 and -0.2. In a preferred embodiment, the pH is between 0.2 and -0.2. In a particular embodiment, the strong acid solution is selected from the group consisting of H₂SO₄, HCI, HBr, HI, HClO₄, or HNO₃. In another particular embodiment, the strong acid solution is selected from the group consisting of ethylenediaminetetraacetic acid (EDTA), nitrilotriacetic acid (NTA), and the like. In yet other particular embodiments, the concentration of the strong acid in the solution is of at least 1M, of at least 2M, of at least 3M, of at least 4M, of at least 5M, or more. In preferred embodiments, the strong acid solution is H₂SO₄ 1M, or HCl 1M.

The method of the invention comprises a step of depleting the AMWs of alkaline earth metals of group 2, transition metals of groups 4-12, other metals of groups 13-16 and metalloids of groups 13-16. However, in particular embodiments, not all of the alkaline earth metals of group 2, transition metals of groups 4-12, other metals of groups 13-16 and metalloids of groups 13-16 are completely removed (i.e., 100% of the element is removed), as explained above. For this reason, in a particular embodiment the step of eluting REEs is preceded by a step of eluting contaminant alkaline earth metals of group 2, transition metals of groups 4-12, other metals of groups 13-16 and metalloids of groups 13-16.

Thus, in an embodiment, the extraction of REEs using LS-IPS containing an organophosphorus acidic extractants (e.g. alkyl phosphinic, alkyl phosphonic and alkyl phosphoric liquid extractants ) is performed with selective elution from the SL-IPS using a strong acid solution (e.g. H₂SO₄ or HCI, at 1M) where alkaline earth metals of group 2, transition metals of groups 4-12, other metals of groups 13-16 and metalloids of groups 13-16 are eluted in the first bed volume (BV), and the REEs are eluted in the subsequent 2-3 bed volumes (BV) of the strong acid solution. In particular embodiments, a mixture of REEs can be obtained in this second fraction of the strong acid solution, in total concentration ranging from 0.05 to 0.50 kg/m³. In particular embodiments, a mixture of REEs can be obtained in this second fraction of the strong acid solution, in total concentration of 0.05 kg/m³, of 0.10 kg/m³, of 0.15 kg/m³, of 0.20 kg/m³, of 0.25 kg/m³, of 0.30 kg/m³, of 0.35 kg/m³, of 0.40 kg/m³, of 0.45 kg/m³, or of 0.50 kg/m³.

In an alternative embodiment, the elution is performed in two stages using a pre-elution of the SL-IPS with a diluted solution (e.g., a strong acid solution at a concentration of 0.025 M or less) of a strong acid (e.g. a strong acid solution selected from the group consisting of H₂SO₄, HCl, HBr, HI, HClO₄, HNO₃ , EDTA or NTA as indicated above) where alkaline earth metals of group 2, transition metals of groups 4-12, other metals of groups 13-16 and metalloids of groups 13-16 are eluted and then a second regeneration stage using a strong acid solution at a concentration of at least 1M, of at least 0.8M, or of at least 0.5M. In a particular embodiment, in this acid solution a mixture of REEs in total concentration ranging from 0.05 to 0.50 kg/m³ can be obtained. In particular embodiments, a mixture of REEs can be obtained in total concentration of 0.05 kg/m³, of 0.10 kg/m³, of 0.15 kg/m³, of 0.20 kg/m³, of 0.25 kg/m³, of 0.30 kg/m³, of 0.35 kg/m³, of 0.40 kg/m³, of 0.45 kg/m³, or in total concentration ranging of 0.50 kg/m³.

In another embodiment of the invention, the method comprises, after step (c), the further steps of:
d) bringing the pH of the eluate obtained in step (c) to a pH of about 0.7-1.3, preferably 1.0, using a base selected from the group consisting of NH₃, MgO(s) and the combination thereof; and
e) precipitating the REEs in the eluate obtained in step (d) as oxalates of REEs by using oxalic acid.

In particular embodiments, step (d) of the method of the invention involves bringing the pH of the eluate to a value of between 0.7 and 1.3, of between 0.8 and 1.2, of between 0.9 and 1.1, or of 1.0. The pH of the eluate is brought to the desired value using a base selected from the group consisting of NH₃, MgO(s) and the combination thereof. NH₃, as used herein, refers to ammonia, with CAS number 7664-41-7. MgO(s), as used herein, refers to magnesium oxide (also known as magnesia), with CAS number 1309-48-4. In the context of the invention, references to MgO(s) have to be understood as equally referring to magnesium hydroxide, Mg(OH)₂, with CAS number 1309-42-8. In a particular embodiment, no base other than a base selected from the group consisting of NH₃, MgO(s) and the combination thereof is used in this step (d) of the method of the invention.

In the context of the instant invention, the term "precipitating" or "precipitation" when referring to the REEs that are present in the eluate is meant to define a step of obtaining a solid final product containing said REEs where the yield of the REEs in the final product is of at least 10%, of at least 20%, of at least 30%, of at least 40%, of at least 50%, of at least 60%, of at least 70%, of at least 75%, of at least 80%, of at least 85%, of at least 90%, of at least 95%, of at least 98%, of at least 99%, or of 100% with respect to the concentration of the REEs in the eluate. The precipitated oxalates can be recovered by means of standard filtration equipment.

As used herein, the term "oxalic acid" (also known by its IUPAC name ethanedioic acid) refers to a dicarboxylic acid with formula HOOC-COOH and with CAS Numbers 144-62-7 (for its anhydrous form), and 6153-56-6 (for its dihydrate form). Oxalic acid has greater acid strength than acetic acid. It is a reducing agent and its conjugate base, oxalate (C₂O₄²⁻), is a known chelating agent for metal cations. Typically, oxalic acid occurs as the dihydrate with the formula C₂H₂O₄·2H₂O.

In another embodiment of the invention, step (a) of the method comprises the sub-steps of:
a1) removing iron (III) and aluminium (III) as solid metal hydroxides using a base to bring the pH of the AMWs to a pH between 4.5 and 4.8, preferably wherein the base is NaOH, optionally wherein iron (II) is pre-oxidised to iron (III) by using H₂O₂ if iron (II) is present in the AMWs;
a2) removing alkaline earth metals of group 2, transition metals of groups 4-12, other metals of groups 13-16 and metalloids of groups 13-16 as solid metal sulphides, by using a sulphide source selected from the group consisting of H₂S, NaHS, Na₂S and combinations thereof, at a pH between 2 and 2.5, optionally, providing H₂O₂ to remove the excess sulphide ions.

In the context of the instant invention, the term "removing" when referring to the iron (III) (in some cases, also to the iron (II)) and aluminium (III) that are present in AMWs, or when referring to alkaline earth metals of group 2, transition metals of groups 4-12, other metals of groups 13-16 and metalloids of groups 13-16 is meant to define a step of removing said elements, such that each element is found in the final purified product at a concentration of less than 70%, of less than 60%, of less than 50%, of less than 40%, of less than 30%, of less than 25%, of less than 20%, of less than 15%, of less than 10%, of less than 5%, of less than 2%, of less than 1%, or of 0% with respect to the concentration of said element in the AMWs. Thus, if the concentration of the element (e.g., Fe, Al, or Zn) in the AMWs is established as the reference value, the concentration of said element in the final purified product can be compared with this reference value, and thus be assigned a level of "decreased". For example, a decrease in concentration levels below the reference value of at least 0.9-fold, 0.75-fold, 0.2-fold, 0.1 -fold, 0.05-fold, 0.025-fold, 0.02-fold, 0.01 -fold, 0.005-fold or even less compared with reference value is considered as "decreased" concentration level.

In the context of the instant invention, if iron (II) is present in the AMWs, then H₂O₂ is optionally added prior to step (a1) in order to pre-oxidise any iron (II) to iron (III).

In the context of the instant invention, a base is used in step (a1) in order to bring the pH of the AMWs to a pH between 4.5 and 5.0. In particular embodiments, the base is used to bring the pH of the AMWs to a pH of about 4.5, of about 4.6, of about 4.7, of about 4.8, of about 4.9, or of about 5.0. In particular embodiments, the base is selected from the group consisting of NaOH, KOH and combinations thereof.

In the context of the instant invention, step (a2) is carried out at a pH between 2 and 2.5. In particular embodiments, step (a2) is carried out at a pH of about 2.0, of about 2.1, of about 2.2, of about 2.3, or about 2.4 or of about 2.5. In particular embodiments, the sulphide source is selected from the group consisting of H₂S, NaHS, Na₂S and combinations thereof. In a particular embodiment, the sulphide source in method step (a2) is NaHS. In specific embodiments, the NaHS is used at a concentration of 50-100mM, of 55-90mM, of 60-80mM, or of 65-70mM. In a preferred embodiment, the NaHS is used at a concentration of 66mM. In other embodiments of the invention, the sulphide source is sulphide generated by means of a biological pathway, wherein sulphate-reducing microorganisms and/or sulphur-reducing microorganisms are able to reduce sulphate (SO₄²⁻) or sulphur (S₀) to hydrogen sulphide (H₂S). In particular embodiments, the sulphate-reducing microorganisms and/or sulphur-reducing microorganisms are sulphate-reducing bacteria and/or sulphur-reducing bacteria.

In a particular embodiment, the method of the invention comprises, between steps (a) and (b), a further step of adjusting the depleted AMWs' pH value to a pH value in the range of 4.0-6.0, or of 4.0-5.0, particularly to a pH value of 4.0, 4.5, 5.0, 5.5, or 6.0 with a base, preferably wherein the base is NaOH, but KOH may also be used. In a particular embodiment, the pH value is adjusted to a value of 4.5.

In another aspect, the invention refers to a method for the recovery of rare earth elements (REEs) from acidic mine waters (AMWs), wherein the method comprises:
i. removing iron (III) and aluminium (III) as solid metal hydroxides using a base to bring the pH of the AMWs to a pH between 4.5 and 4.8, preferably wherein the base is NaOH, optionally wherein iron (II) is pre-oxidised to iron (III) by using H₂O₂ if iron (II) is present in the AMWs;
ii. removing alkaline earth metals of group 2, transition metals of groups 4-12, other metals of groups 13-16 and metalloids of groups 13-16 as solid metal sulphides, by using a sulphide source selected from the group consisting of H₂S, NaHS, Na₂S and combinations thereof, at a pH between 2 and 2.5; optionally, providing H₂O₂ to remove the excess sulphide ions;
iii. extracting the REEs using a selective ligand impregnated polymeric support (SL-IPS), wherein the SL-IPS comprises an organo-phosphorus acidic extractant selected from the group consisting of an alkyl phosphinic acid, an alkyl phosphonic acid, and an alkyl phosphoric acid;
iv. eluting the REEs from the SL-IPS with a strong acid solution, at a pH between 0 and 0.5;
v. bringing the pH of the eluate obtained in step (iv) to a pH of about 0.8-1.2, preferably 1.0, using a base selected from the group consisting of NH₃, MgO(s) and the combination thereof; and
vi. precipitating the REEs in the eluate obtained in step (v) as oxalates of REEs by using oxalic acid.

All the terms and embodiments described herein are equally applicable to all aspects of the invention.

It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice.

### EXAMPLES

The following invention is hereby described by way of the following examples, which are to be construed as merely illustrative and not limitative of the scope of the invention.

### Example 1: Principles and examples of the REE recovery process from acidic waters

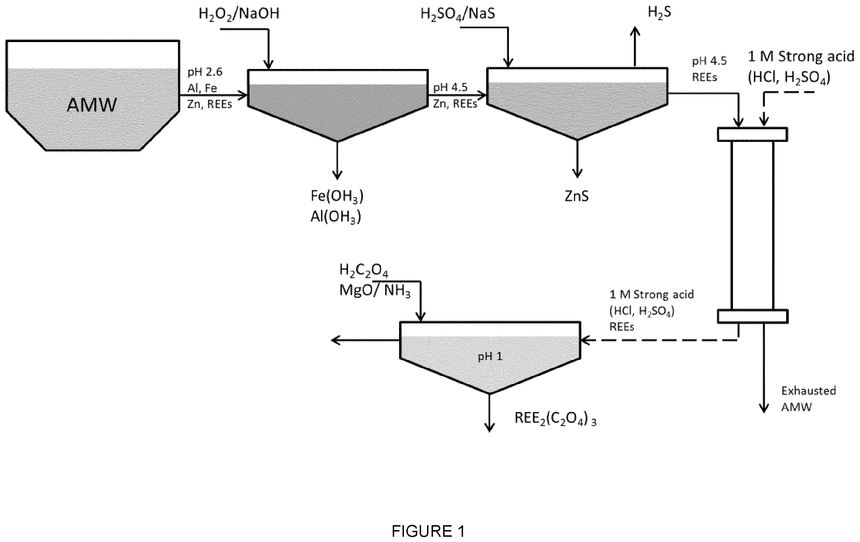

In order to recover REEs from AMWs, the following treatment scheme is proposed as a particular example (Figure 1):
1) The first step was the removal of aluminium (Al) and iron (Fe). Due to the nature of these acidic mine waters, iron can be present as a mixture of Fe(ll) and Fe(III). For this reason, H₂O₂ was added to completely convert Fe(ll) to Fe(III). After this conversion, a base/ alkali (in this case, NaOH) was added to precipitate Al and Fe as Al(OH)₃ and Fe(OH)₃.
2) The second step was the precipitation of metal sulphides (MS(s)). Divalent transition metals M(II) were removed from the aqueous streams using sulphide ions (S²⁻) and recovered after filtration. In order to do that, Na₂S or NaHS or H₂S (or mixtures thereof) were added to the solution. Then, MS(s) precipitates were collected under controlled pH conditions (pH is maintained at about pH 2.0 with H₂SO₄). Finally, the excess of S²⁻ was removed using H₂O₂.
3) The third step was the recovery of REEs using a SL-IPS containing an organophosphinic derivative and subsequent selective elution of the metals retained in the column by using a 1M strong acid solution (H₂SO₄ or HCI). REEs were not eluted in the first bed volume, but they were recovered in the subsequent bed volumes.
4) The last step was the recovery of REEs from the eluate acidic solution (at a pH between 0-0.5) using oxalic acid (HOx) and NH₃ or MgO as a base/ alkali to recover mixtures of REE oxalate precipitates (REE₂Ox₃(s)).

Metal-enriched acidic waters such as AMWs are amenable to being applied as input streams in order to recover REEs and/or other transition metals of added value (Zn, Cu) or which are considered as critical raw materials for the EU (e.g., Co). The work done on this study was from an open-pit of a mine that processes mineral sulphides.

### 1.1. Step 1. Precipitation of aluminium/ iron hydroxides Al(OH)₃ and Fe(OH)₃

Aluminium and iron may not only represent a limitation when operating the column in terms of preferential selective exchange instead of REEs, but they may also cause the formation of solid mineral phases during column operation. Therefore, in order to remove Fe and Al, 4 mL of 30% Hydrogen Peroxide (H₂O₂) per L of AMW were used to oxidize ferrous ions (Fe²⁺) to ferric ions (Fe³⁺). Next, 5M Sodium Hydroxide (NaOH) was used to increase the pH to 4.5. The reason for the oxidation of Fe²⁺ to Fe³⁺ comes from the fact that the pH range for the precipitation of Fe(OH)₂ is in between pH 5.85 ~ 8.35, but the precipitation of Fe(OH)₃ already takes place at pH values around 3.0. On the other hand, the pH precipitation values for aluminium are in the range between 3.0 and 4.7.

### 1.2. Step 2. Precipitation of metal sulphides (MS(s))

During preliminary work in order to optimise REE recovery by means of a sorption column using SL-IPS, it was found that divalent transition metal ions (e.g. M(II): Zn Cu, Ni, Co, Cd, Pb) could be preferentially adsorbed in the impregnated resin, instead of REEs. Therefore, their removal was considered a necessary step, in order to remove contaminants and also as a possible source of valuable elements or critical elements. In order to remove these divalent metal ions, the most efficient method is their precipitation as metal sulphides (MS(s)) due to their low solubility. This can be achieved using different sulphide sources, such as H₂S, Na₂S and/or NaHS. The principle is the reaction of M(II) and S²⁻ to produce insoluble MS(s) as described in equations (1)-(3) herein below:

H₂S(g)+M⁺²⇄MS(s)+2H⁺ (1)

Na₂S+M⁺²⇄MS(s)+2Na⁺ (2)

NaHS+M⁺²⇄MS(s)+Na⁺+H⁺ (3)

Initially, to determine the optimum dosage, NaHS·H₂O was used to treat AMW after Al/Fe removal. Experiments were carried out with 40 mL of pre-treated AMW at different NaHS·H₂O concentrations (10, 25, 50, 75, 100 and 200 mM) at a constant pH (pH 2). It was observed that, during the reaction, pH tended to increase with the dose of NaHS. Therefore, 98% H₂SO₄ was added to decrease the pH to about 2.0. Experiments were carried out in a 5 L hermetic glass reactor magnetically stirred to ensure homogeneity in all the solution. After 90 minutes, sulphuric acid (H₂SO₄) was used to acidify the solution to pH 2.0. In the last step, after filtration, the excess of S²⁻ions were removed using H₂O₂, and NaOH was used to adjust the pH to 4.5. In addition, the reactor was connected to a gas cleaner in order to neutralise the H₂S(g) released during the reaction. The gas cleaner contained a mixture of NaOH to solubilise the H₂S(g) into S²⁻ and H₂O₂ was added to oxidize the S²⁻ to SO₄²⁻ as described in equations (4)-(5) herein below. Notably, the gas cleaner contained methyl orange to monitor when the NaOH was exhausted.

*NaOH* + *H₂S*(*g*) *→ S*²⁻(*aq*) + *H*⁺ + *H₂O* + *Na*⁺ (4)

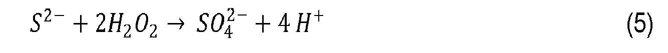

### 1.3. Step 3. Extraction of REE by using selective ligand impregnated polymeric support (SL-IPS) with organophosphinic derivatives

Selective ligand impregnated polymeric sorbents using cross-linked polystyrene divinyl bencene as macroporous support and containing Bis-(2,4,4-trimethylpentyl-) phosphinic acid (Cyanex 272) as an extractant were prepared as described by Cortina et al., Solvent impregnated resins containing Cyanex 272. Preparation and application to the extraction and separation of divalent metals, React. Polym. 18 (1992) 67-75. The pre-treatment of resin was carried out using clean water to soak it for 12 to 24 hours, until the SL-IPS was fully expanded. This step provides a large surface area for ion exchange, and also cleans impurities.

Pre-treated AMW (i.e., AMW that has been depleted of Fe, Al and divalent metals M(II)) was then treated with ion-exchange resins. The set-up consisted of a beaker containing the solution, a Miniplus 3 peristaltic pump (Gilson, USA) in an open-loop configuration at room temperature, the columns (diameter 2.2 cm, height 11.3 cm) and a fraction collector (FC 204, Gilson, USA). The columns were loaded with 15.0 g of the SL-IPS containing Cyanex 272. Samples collected were analysed by ICP-OES and ICP-MS to determine metal and REE concentration. Data are reported as the mean ± standard deviation. Sorption experiments (i.e., loading) were carried out with pre-treated AMW at a rate of 1.25 mL/min. Desorption of REE (i.e., elution) was carried out by pumping 1M H₂SO₄ at 0.5 mL/min.

### 1.4. Step 4. Recovery of REE by precipitation with oxalic acid

After elution, the samples which had higher concentrations of REEs according to ICP results in the regeneration step were collected and oxalic acid (H₂C₂O₄) was used to produce REE₂(C₂O₄)₃ precipitates. It must be noted that metal oxalates are quite insoluble, especially those of trivalent metals, such as REE oxalates. The mass of H₂C₂O₄ needed to be added was determined according to ICP results, and it was doubled (that is, it was used in excess). This was because H₂C₂O₄ reacts not only with REE but also with other metals, so excessive addition was needed to ensure that all REE would precipitate. Finally, NaOH, Ca(OH)₂, MgO and NH₃ were all tested as a base/ alkali used for increasing the pH of the eluate (from approx. pH 0 due to elution with 1 M H₂SO₄) to about 1.0, in order to precipitate the REE oxalates. After that, solid and liquid samples were collected. The precipitates were analysed by scanning electron microscopy (SEM) and X-ray diffraction (XRD) to determine the morphologies and whether the white crystals produced contained other substances. Analysis of liquid samples allowed determining the % of recovery of REEs (i.e., yield of recovery).

### Example 2: Examples describing the recovery process of REE

### 2.1. Characterisation of acidic mine water (AMW)

The AMW has a pH about 2.38 and conductivity of 13.15 mS/cm. Table 1 shows the chemical composition of the AMW. Accordingly, it was divided into 3 parts, the first one is major elements, the second part is other elements and the third part is the REEs.

**Table 1. Composition (mg/L) of the AMW from the Aznalcóllar Open-pit**

| Major components | | | | | | | | | | | | | | | | | | | | | | |
|---|---|---|---|---|---|---|---|---|---|---|---|---|---|---|---|---|---|---|---|---|---|---|
| Al | | Ca | | | Cu | | Fe | | Mg | | Mn | | | Na | | S | | Si | | | Zn | |
| 422.48 | | 553.10 | | | 20.50 | | 156.04 | | 2155.6 7 | | 199.87 | | | 90.93 | | 4662.2 5 | | 37.79 | | | 736.21 | |

| Other elements | | | | | | | | | | | | | | | | | | | | | | |
|---|---|---|---|---|---|---|---|---|---|---|---|---|---|---|---|---|---|---|---|---|---|---|
| K | Sc | | | Co | | Ni | | Ge | As | | Se | | Sr | | Cd | | Pb | | Th | | U | |
| 4.84 | 0.04 | | | 4.78 | | 2.44 | | 0.12 | 0.30 | | 0.27 | | 1.51 | | 1.86 | | 0.05 | | 0.02 | | 0.06 | |

| Rare Earth Elements | | | | | | | | | | | | | | | | | | | | | | |
|---|---|---|---|---|---|---|---|---|---|---|---|---|---|---|---|---|---|---|---|---|---|---|
| Y | La | | Ce | | Pr | Nd | | Sm | Eu | Gd | | Tb | | Dy | Ho | | Er | Tm | | Yb | | Lu |
| 1.3 9 | 2.4 6 | | 5.2 4 | | 0.6 1 | 2.3 9 | | 0.5 0 | 0.0 8 | 0.6 4 | | 0.0 7 | | 0.3 4 | 0.0 5 | | 0.1 3 | 0.0 1 | | 0.0 7 | | 0.0 1 |

Table 1 shows that the main contaminants of AMWs from the Aznalcóllar Open-pit are Mg (2155 mg/L) and S (4662 mg/L). It is also remarkable to note the presence of high added value components, such as Zn (736 mg/L) and Cu at a lower content (20.50 mg/L). Regarding REEs, their total concentration is around 14 mg/L. Moreover, the AMW presents As (0.30 mg/L), Se (0.27 mg/L), Th (0.02 mg/L) and U (0.06 mg/L), which represent an environmental problem because of their toxicity (e.g. As and Se) and their radio-activity concerns (e.g. Th and U). In addition, the presence of Al (422 mg/L) and Fe (156 mg/L) may cause some precipitation during the ion-exchange column, so their removal is necessary.

### 2.2. Selective precipitation of aluminium and iron

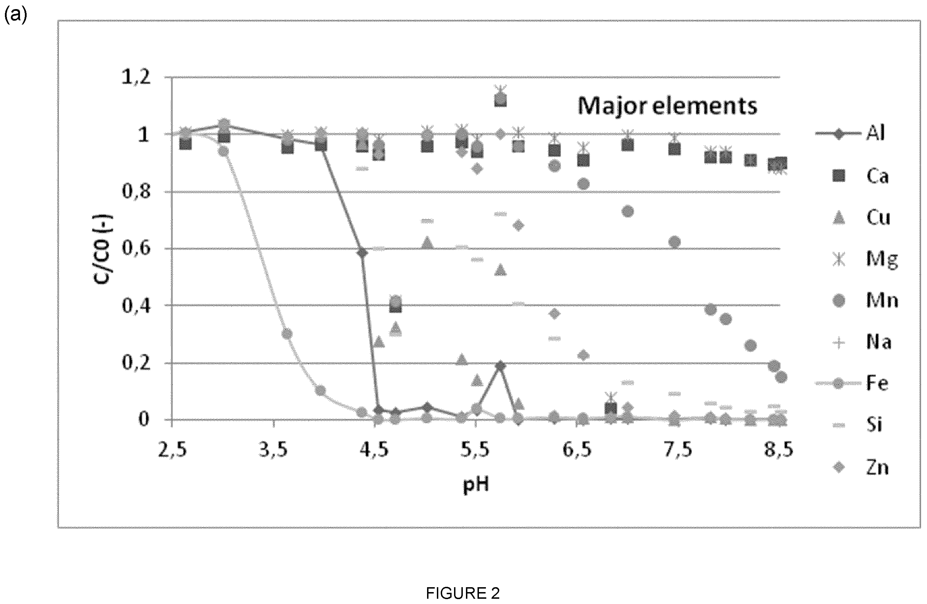

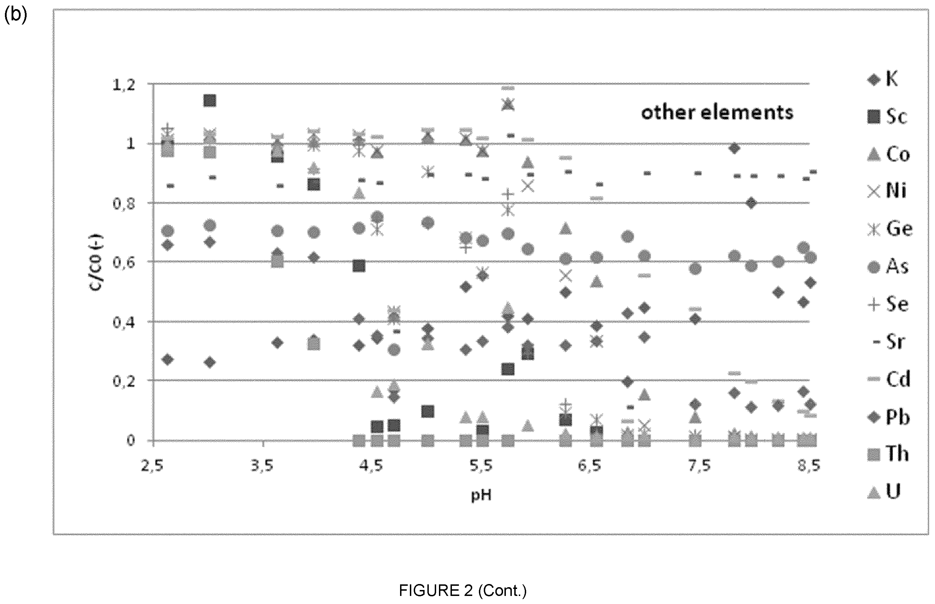

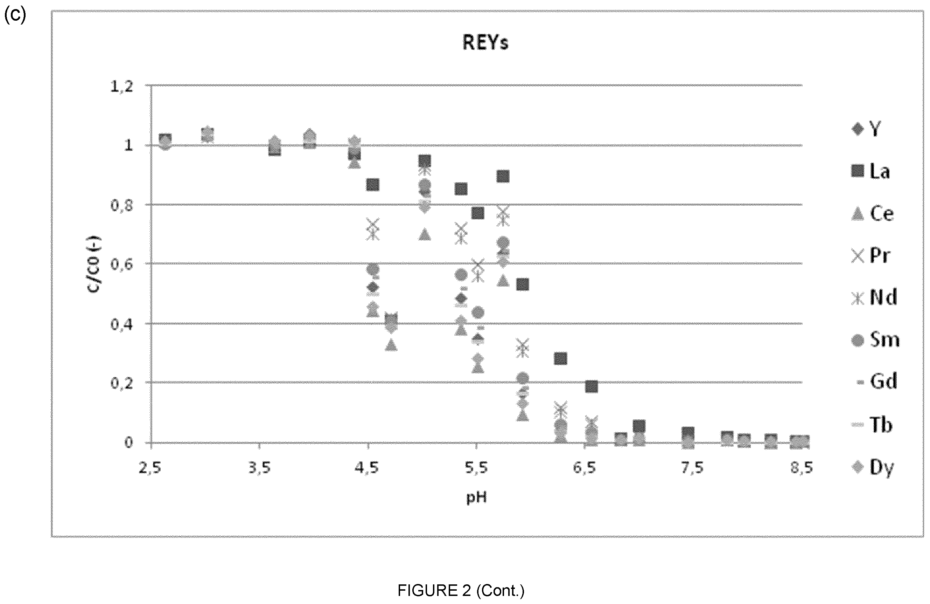

H₂O₂ was added to AMW in order to completely convert Fe(II) to Fe(III). After this conversion, a base/ alkali (in this case, NaOH) was added in order to precipitate the elements that are present in the AMW solution. Figure 2 shows the precipitation trends for all the elements in the AMW solution. It can be observed that Fe(III) starts to precipitate at pH 3.0, and it is totally removed at pH 4.5 (>99.5%). Al(III) instead starts to precipitate at higher pH values (4.0), and a removal of 96% can be achieved at pH 4.5. Its removal can be improved; however, part of the REEs may be lost (Figure 2.c). Other elements, such as Zn start to precipitate at pH 5.3, and it is completely removed from the solution at pH 7. Mn instead precipitates at slightly higher pH (6.0), whereas Ca and Mg do not precipitate in the evaluated pH range. Therefore, a pH value of 4.5 can be selected for the effective removal of Fe and Al.

An analysis of the solid precipitates carried out by SEM indicated that, at this pH value of 4.5, the precipitated solid is a mixture of Al and Fe sulphates and hydroxides. Experimental results are in agreement with those published in the literature. A previous study observed that, during the precipitation of Fe/AI hydroxysulphates, As(V) and Se(V) were partially adsorbed onto the solid phase, whereas Zn, Cu and the REEs did not precipitate.

### 2.3. Recovery of REEs from Fe/AI depleted AMW by a SL-IPS containing Cvanex 272 under column operation

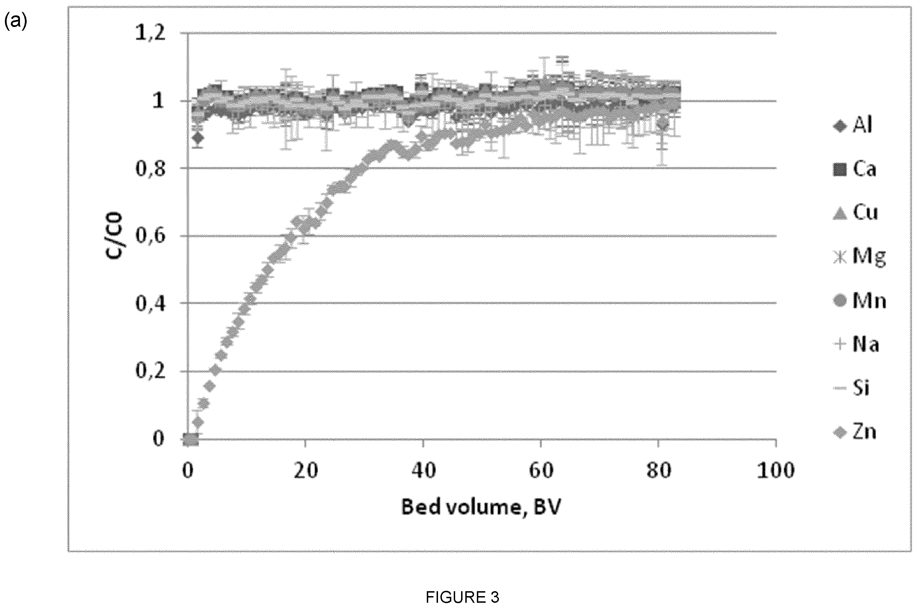

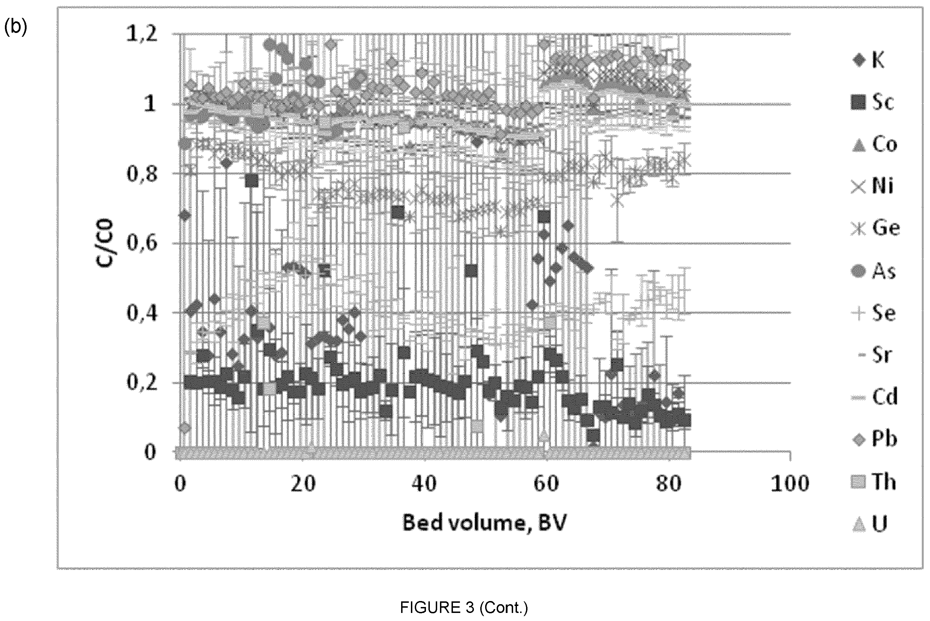

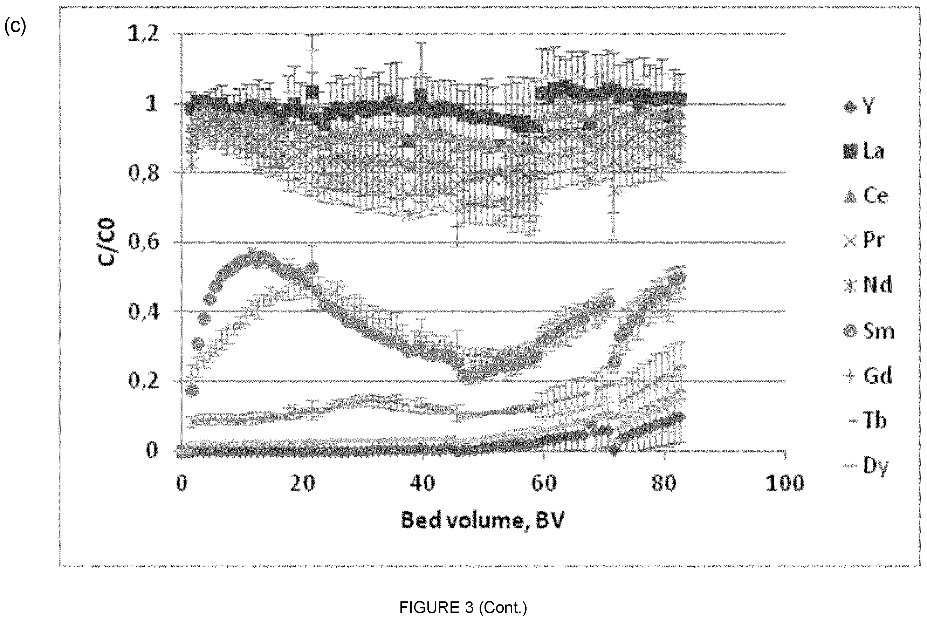

Recovery of REEs was attempted from AMWs that were depleted of Fe/AI by precipitation with NaOH at a pH value of 4.5. Figure 3 shows the average results from 4 different experiments, wherein Zn can be seen to have a stronger binding ability, so that the initial concentration ratio is around 0, and the SL-IPS was almost saturated at 20 to 40 bed volumes (BV). Under this scenario, all the Zn that was originally present in the AMW was sorbed in the resin.

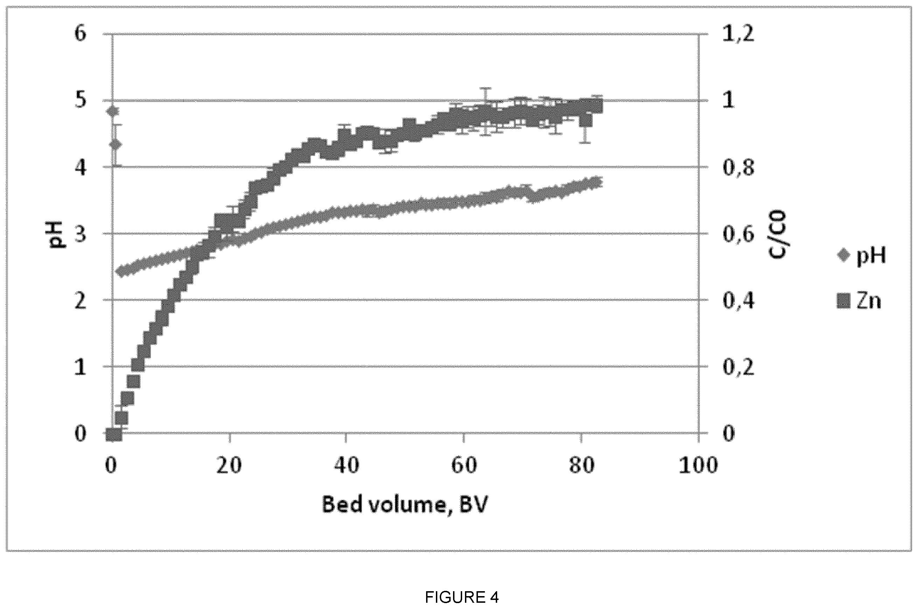

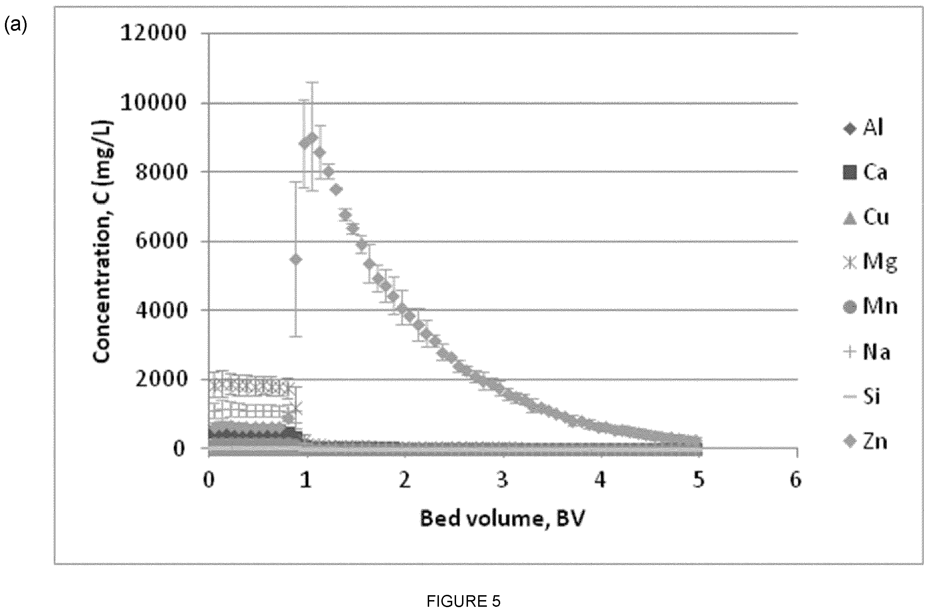

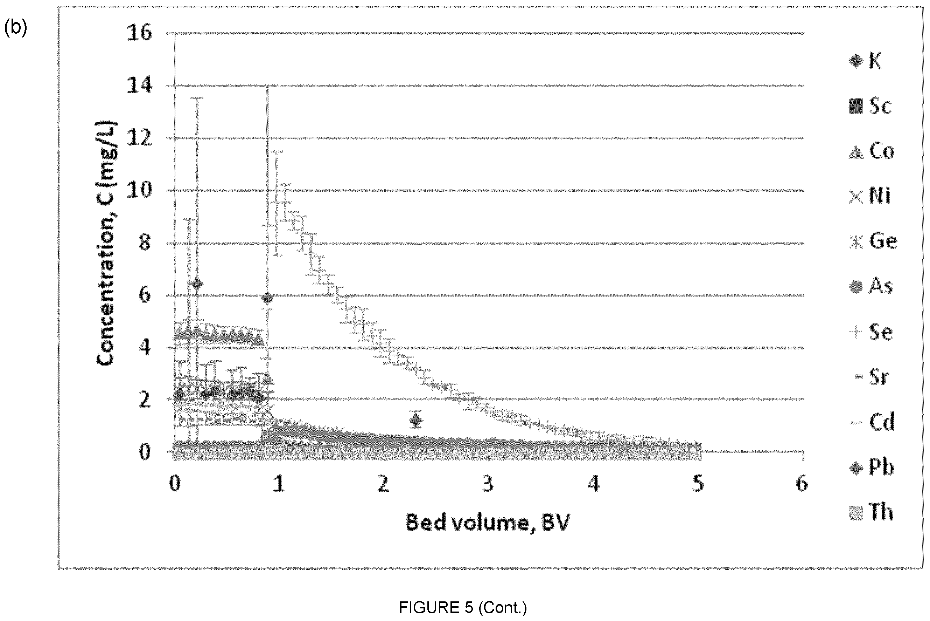

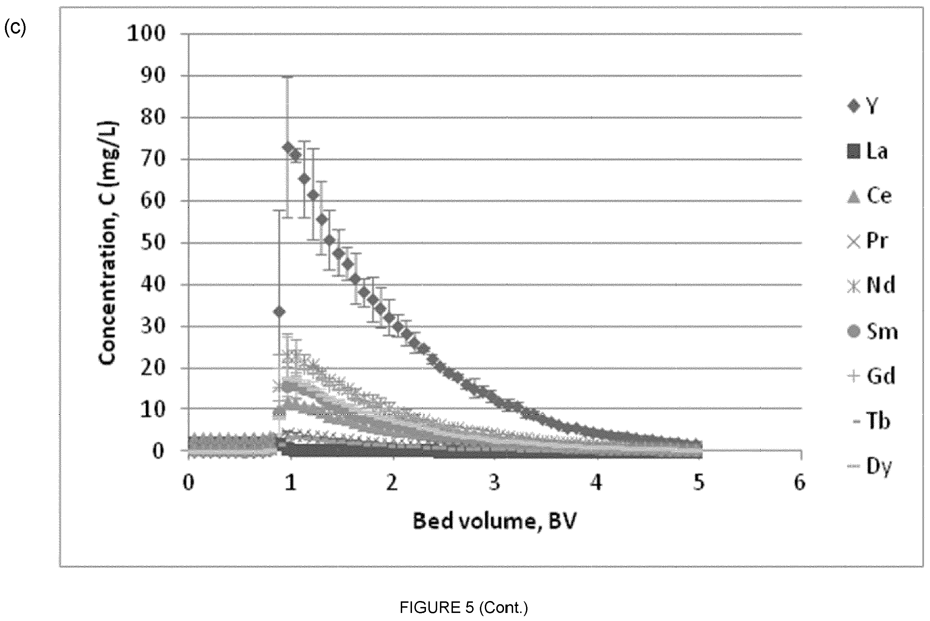

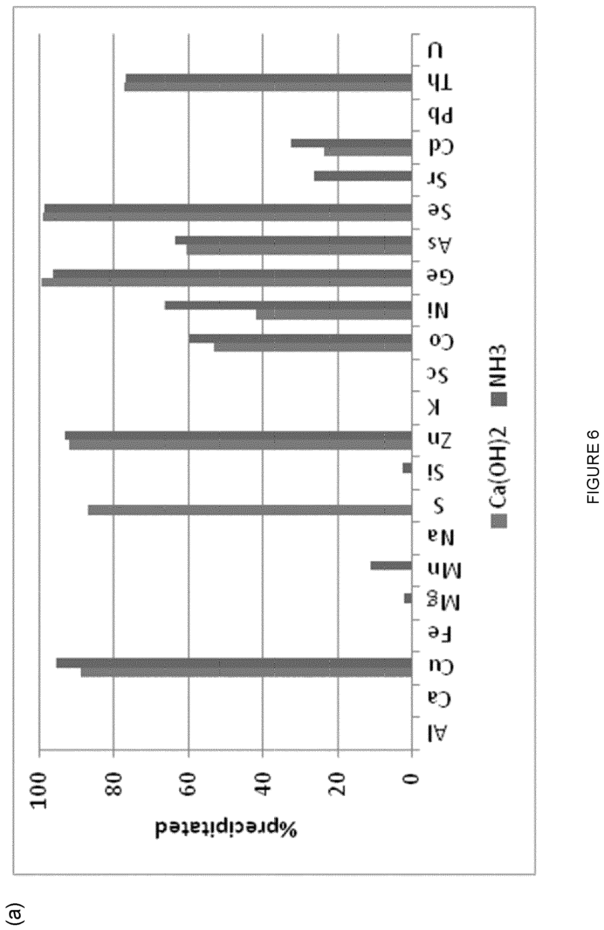

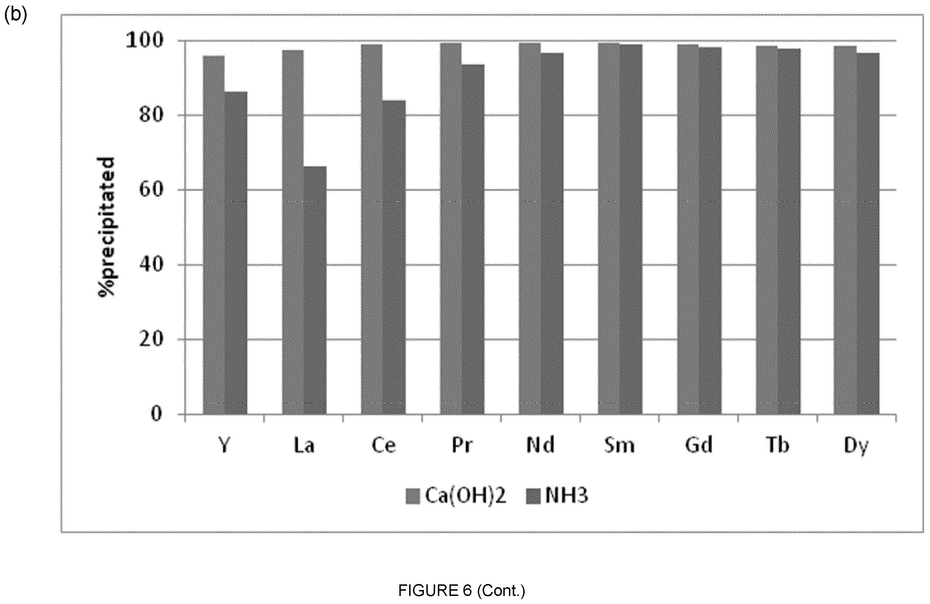

Regarding the REEs, it can be seen that the light REEs were not extracted (La, Ce, Pr and Nd). However, Sm and Gd followed a strange trend, suggesting that they are sorbed and then replaced by other REEs or by Zn. The remaining REEs (Dy, Tb and Y) were readily sorbed in the resin. In relation to the pH curve, a certain tendency can be seen in Figure 4. Due to the uptake of Zn²⁺ ions, the solution exiting the column gets acidified. The pH of this stream increases with bed volume as no further metals were sorbed into the column. Figure 5 shows the elution profiles under these particular conditions. In Figure 6, [Zn²⁺] reached a maximum peak of 9029 mg/L, whereas the peak concentration for Y was 72.87 mg/L. The peaks for the other REEs remained below 30 mg/L.

In the final step, NaOH, Ca(OH)₂, MgO and NH₃ were all tested as a base/ alkali used for increasing the pH of the eluate (from approx. pH 0 due to elution with 1 M H₂SO₄) to about 1.0, in order to precipitate the REE oxalates. Of these four experiments, calcium hydroxide (Ca(OH)₂) as solid and NH₃ (30% wt.) as liquid were particularly evaluated to carry out the precipitation with oxalate. The use of NaOH was promptly discarded as it caused the precipitation of sodium hydrogen oxalate hydrate (NaHC₂O_{4·}H₂O(s)). Results of the precipitation tests are shown in Figure 6. These results show that Zn²⁺ precipitated between 91 to 93%. In the case of REEs, all of them ranged from 66% (La) to 99.5%. However, one of the drawbacks of using Ca(OH)₂ as a base/ alkali is the coprecipitation of gypsum (CaSO₄·2H₂O), which affected the purity of the final product.

Morphology analyses of the oxalate precipitates by SEM show different morphologies, which range from big and irregular crystals to twinned crystals. In the case of precipitates obtained after treatment with NH₃, the crystals are more regular and seem to form a conglomerate of flat structures. From the SEM analysis, it was possible to obtain a semi-quantitative analysis of the chemical composition of the solid (Table 2). It can be observed that gypsum (CaSO₄·2H₂O) precipitated during the process that used Ca(OH)₂ as a base/ alkali, leading to higher impurities in the purified final solid. The use of NH₃ as a base/ alkali is that it allows the precipitation of detectable trace amounts of yttrium (Y).

**Table 2. Semi-quantitative analysis of the obtained solids**

| | C | O | S | Ca | Cu | Zn | Y |
|---|---|---|---|---|---|---|---|
| Ca(OH)₂ | 12.6 | 52.2 | 13.2 | 11.2 | 1.1 | 9.8 | |
| NH₃ | 18.7 | 41.6 | 1.5 | | | 37.4 | 0.7 |

The analysis by XRD showed the presence of gypsum (CaSO₄·2H₂O), Zinc oxalate hydrate (ZnC₂O₄·2H₂O), Anhydrite (CaSO₄) and Wheddellite (CaC₂O₄·2H₂O) after Ca(OH)₂ treatment, whereas only zinc oxalate hydrate (ZnC₂O₄·2H₂O) was detected when NH₃ was used. As it can be seen, the presence of Zn in AMWs that were depleted of Fe/AI by precipitation with NaOH at a pH value of 4.5 resulted in a limitation when using SL-IPS for the recovery of REEs. Therefore, the SL-IPSs were also tested with a AMW solution that is also depleted of Zn (that is, after Zn removal as ZnS(s) using Na₂S), as shown in sections 2.4 and 2.5 below.

### 2.4. Precipitation of divalent metal transition sulphides (MS(s))

H₂O₂ was added to AMW in order to completely convert Fe(II) to Fe(III). After this conversion, a base/ alkali (in this case, NaOH) was added at a pH of 4.5 in order to precipitate the Fe/AI that are present in the AMW solution. Subsequently, divalent transition metals M(II) were removed from the Fe/AI depleted aqueous streams using sulphide ions (S²⁻), wherein Na₂S or NaHS or H₂S (or mixtures thereof) were added to the solution. MS(s) precipitates were filtered and collected under controlled pH conditions (pH is maintained at about pH 2.0 with H₂SO₄). Finally, the excess of S²⁻was removed using H₂O₂.

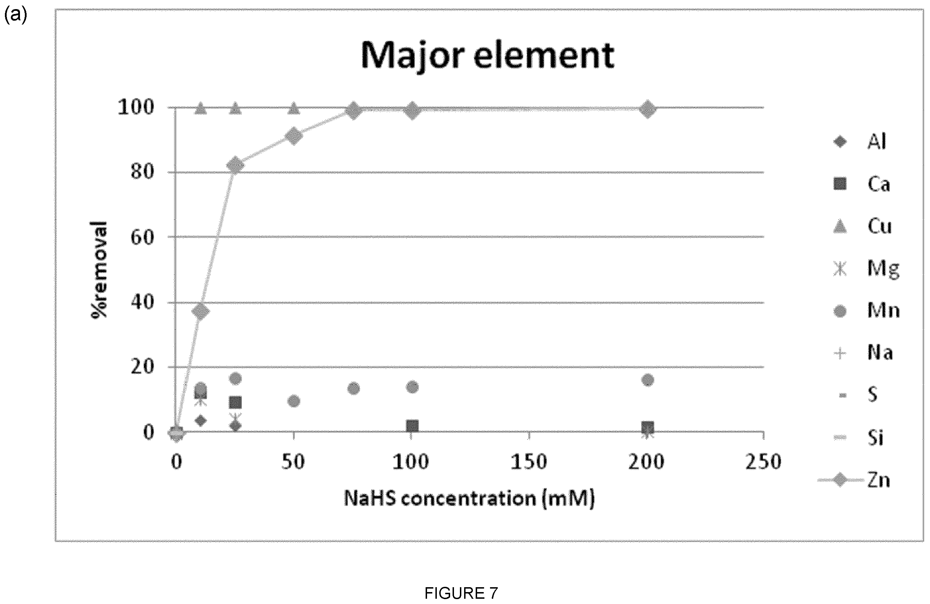

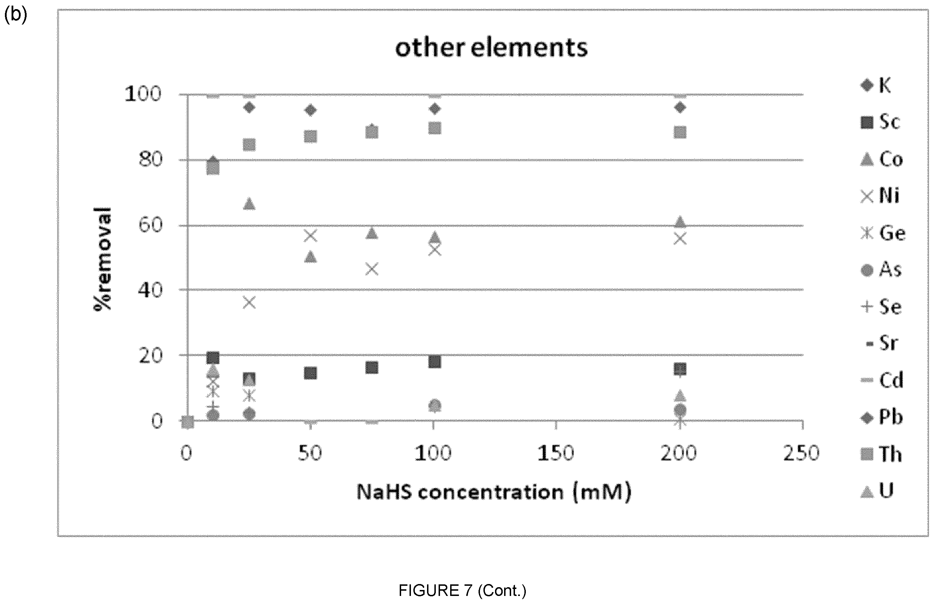

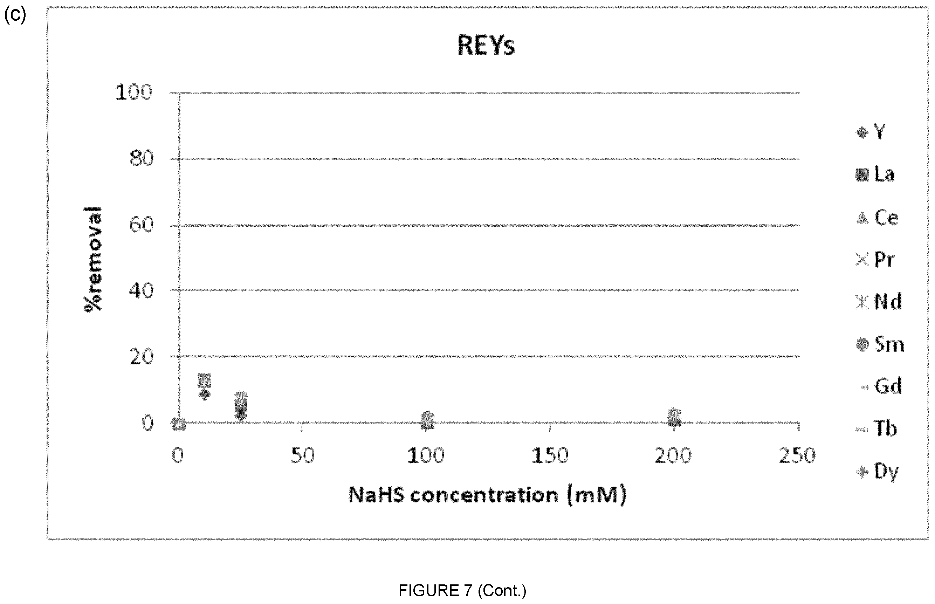

Figure 7 reports the effect of sulphide concentration on the removal efficiency of bivalent metals (M(II)). It can be observed that the removal efficiency of Zn increased at higher NaHS concentrations. For example, at a NaHS concentration of [NaHS] = 50 mM, the removal of Zn (as ZnS(s)) was 91.2%, whereas it was 99.99% at [NaHS] = 75 mM. In addition, other elements were completely removed, such as Cu and Cd, showing values >99.9% independently of NaHS concentration. Other elements precipitate in a lower extent, such as Pb or Th, starting from removals of 80% at 10 mM NaHS and increasing up to 85%. Removal ratios of Ni and Cu ranged between 40 to 50%, while other elements such as Mn and Sc remained below 20%. Moreover, regarding the REEs, they barely precipitate (<7%). In view of these experimental results, a NaHS concentration value of 66 mM was used in subsequent experimental work. Earlier studies by other authors had similarly achieved % removals higher than 99% for Zn, Co and Cu after adding Na₂S to an AMW (Prokkola et al., "Removal of Metals by Sulphide Precipitation Using Na2S and HS- solution", ChemEngineering 2020, 4, 51).

Finally, SEM-EDAX analysis from precipitates collected after the reaction with 66 mM [S²⁻] at pH 2 identified mineral particles mainly containing sulphur (S) and zinc (Zn) (ZnS(s)) and sulphur (S) and copper (Cu) (CuS(s)). Additionally, after filtering the solution, H₂O₂ was added to convert the remaining S²⁻ into sulphate. After that, NaOH was added to increase the pH from 2 to 4.5. During this process, a yellow/ orange precipitate was collected, which was formed by cerium (Ce) (oxidation of Ce(III) to Ce(IV) after H₂O₂ addition).

### 2.5. Recovery of REEs from Fe/AI and Zn depleted AMW by means of Cvanex 272-containing SL-IPS

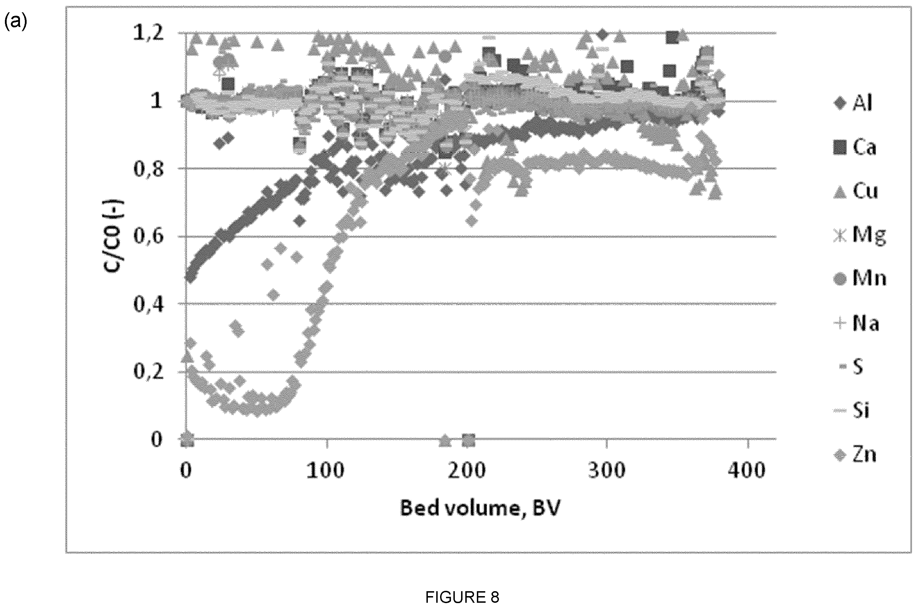

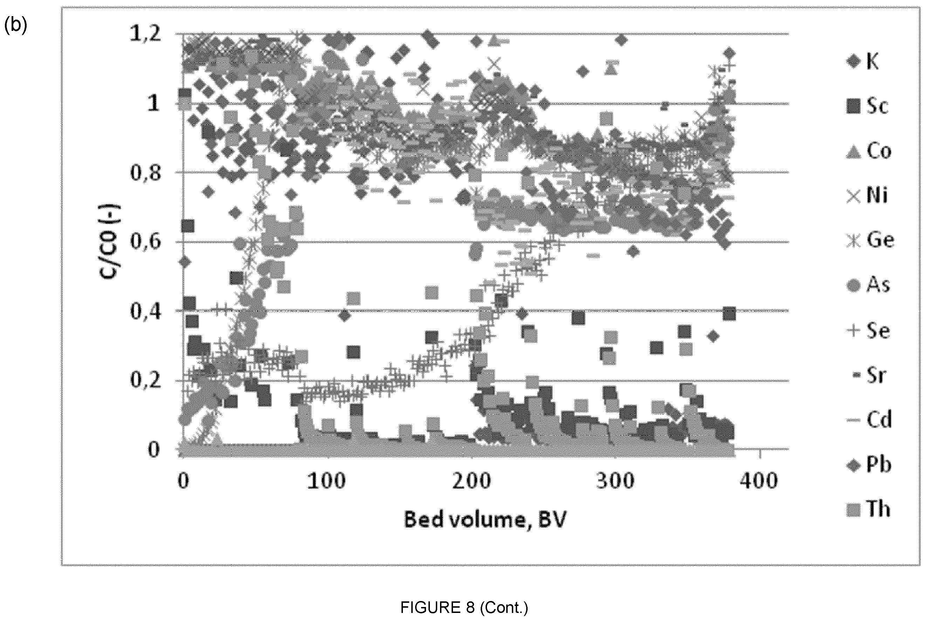

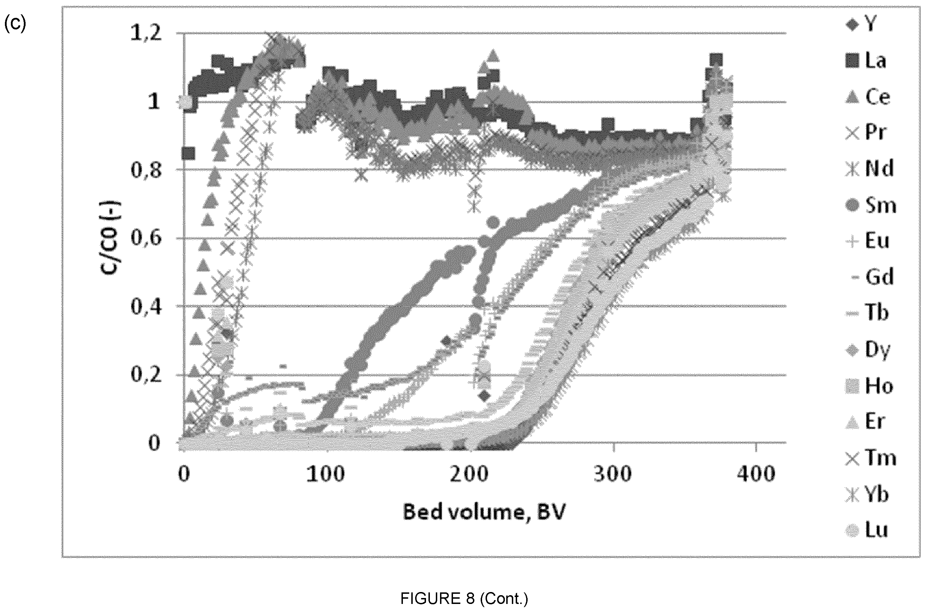

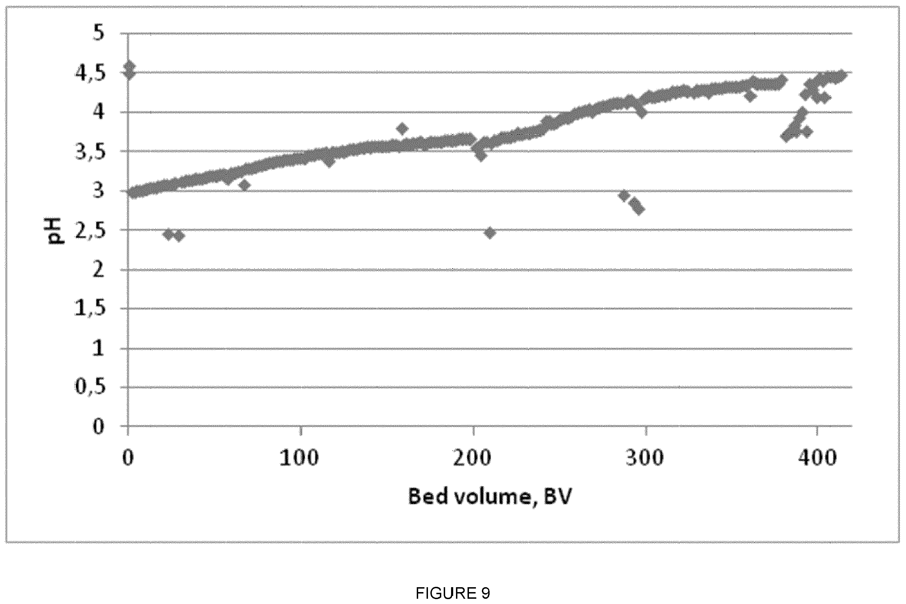

Recovery of REEs was attempted from AMWs that were first depleted of Fe/AI by precipitation with NaOH at a pH value of 4.5 and subsequently depleted of divalent transition metals M(II) using sulphide ions (S²⁻). Figure 8 shows results corresponding to two repetitions of the same experiment, performed in this case with the solution without Zn²⁺, that is, with the Fe/AI and Zn depleted AMW. In this case, the concentration of Zn²⁺ was 5.54±0.78 mg/L, instead of 769 mg/L as in the previous experiments, wherein divalent transition metals M(II) had not been removed (see section 2.4 above). It can be observed that Zn²⁺ followed a strange trend due to this low concentration. Besides, it can be observed that part of the Al was retained in the column. This Al results from incomplete removal of Al during Fe/AI precipitation with NaOH at a pH value of 4.5. In the previous experiments, it was observed that Al(III) was not retained in the resin. Regarding the REEs, it can be observed again that the light ones were not retained (La, Ce, Pr and Nd). It can also be observed that the resin was almost saturated on Sm, Gd and Eu at bed volume BV>100, whereas for the other REEs (Tb, Dy, Ho, Er, Tm, Yb, Lu and Y) this happened at bed volumes higher than 200. Finally, the resin needed to achieve around 400 BV in order to be completely saturated. In regards the pH variation, Figure 9 shows that a small increase could be measured at higher bed volumes. This was due to the low concentration of REEs, which were the only cations responsible for the pH trends.

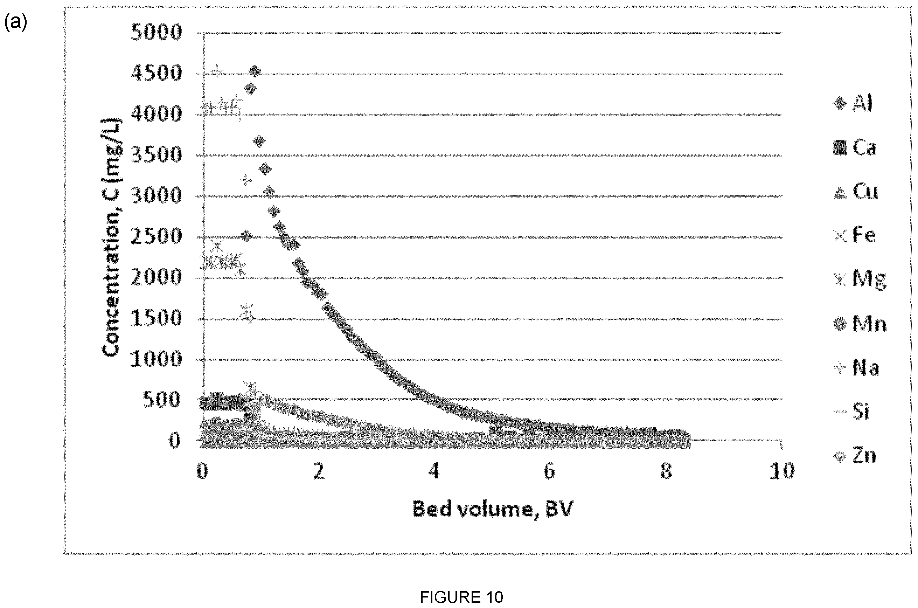

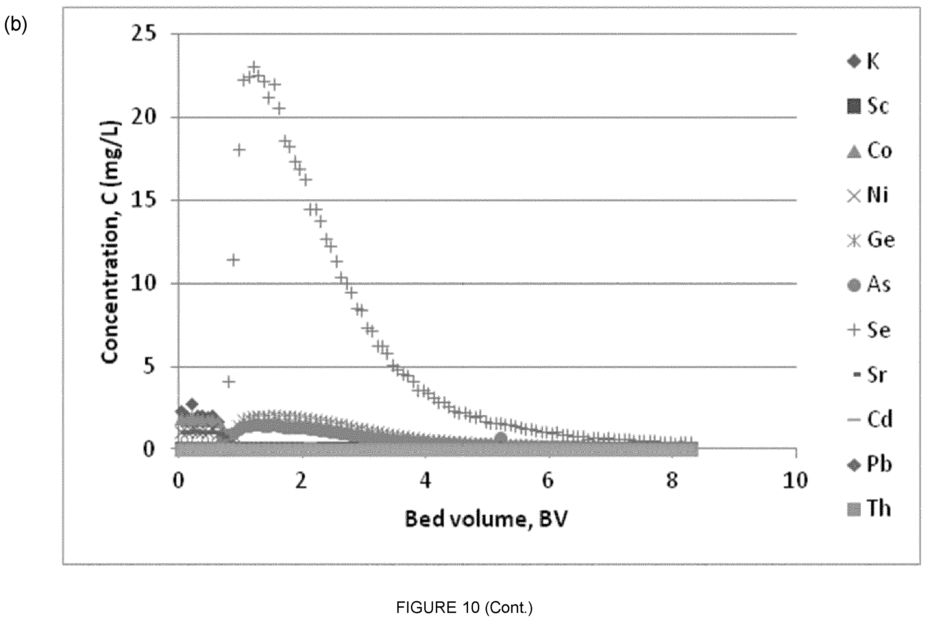

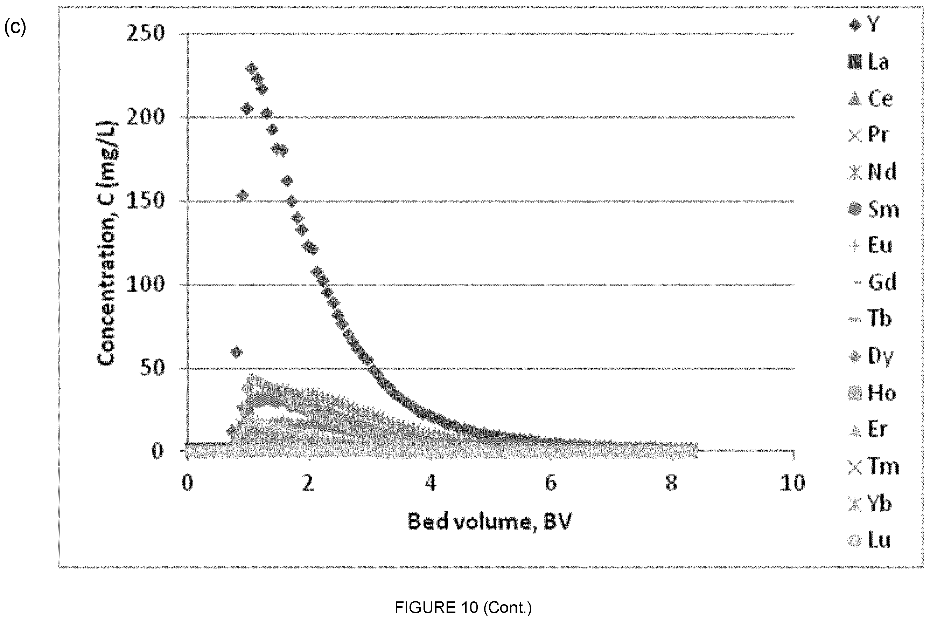

Figure 10 shows the elution profiles under these particular conditions. In this case the main impurity in the eluate was aluminium (with a concentration peak of 4541 mg/L). In this case, Zn exhibited a small peak, of about 500 mg/L ([Zn²⁺] was 9029 mg/L in the previous experiments, as shown in section 2.4 above). Notably, a maximum peak of 229.9 mg/L for Y was attained due to the lower competition for the REEs in the SL-IPS.

Regarding the eluate concentration for the other REEs, they were below 50 mg/L. For example, the maximum peaks for REEs were 43.7 mg/L Dy, 40.8 mg/L Gd, 37.2 mg/L Nd, 31.7 mg/L Sm, 19.3 mg/L Er, 17.4 mg/L Ce, 11.4 mg/L Yb, 8.5 mg/L Ho, 8 mg/L Tb, 7.6 mg/L Er, 6.5 mg/L Pr, 1.91 mg/L Tm, 1.3 mg/L Lu and 0.9 mg/L La.

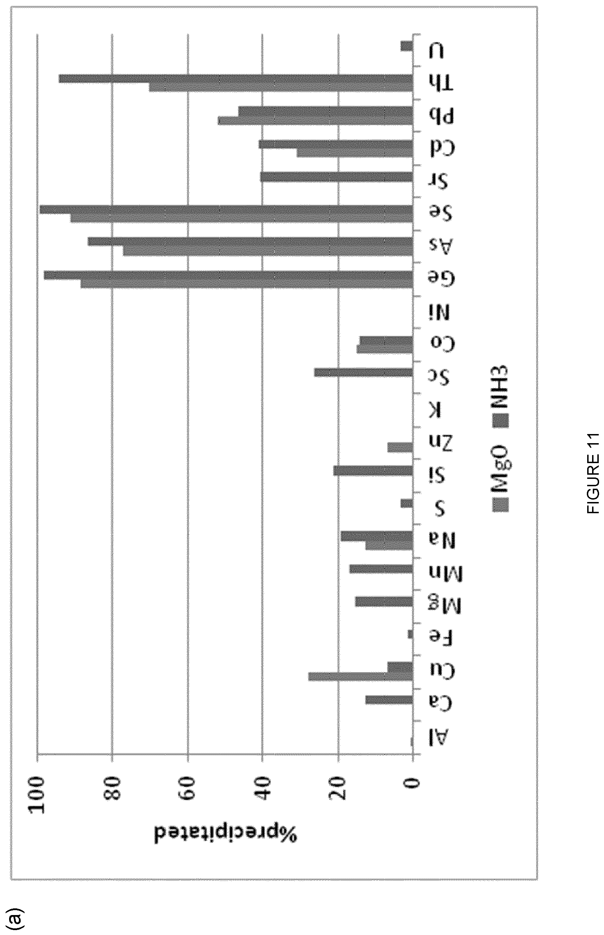

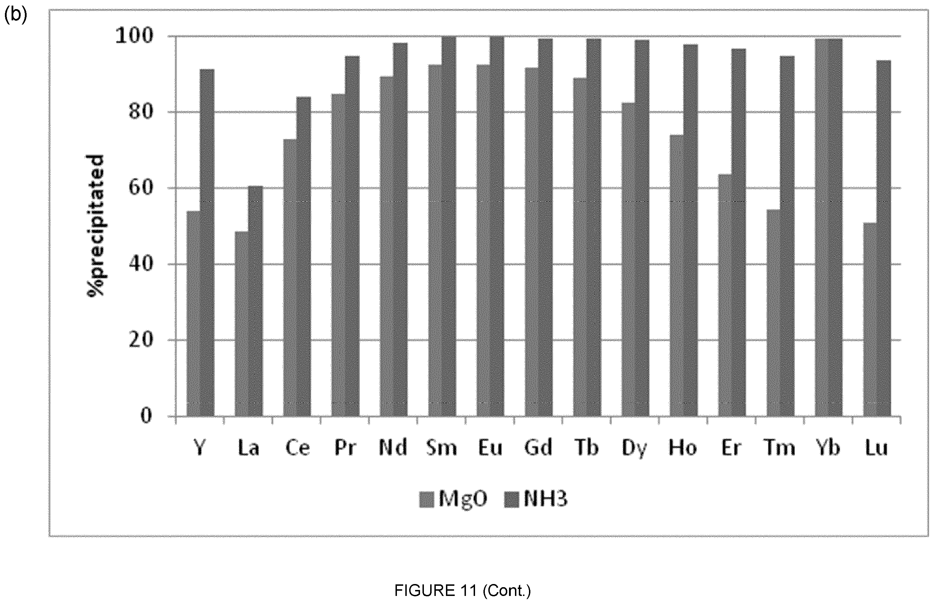

In the final step, MgO and NH₃ were all tested as a base/ alkali used for increasing the pH of the eluate (from approx. pH 0 due to elution with 1 M H₂SO₄) to about 1.0, in order to precipitate the REE oxalates. Figure 11 shows the precipitation results carried out using magnesium oxide (MgO) as solid and ammonia (NH₃, 30% wt.) as liquid. It can be seen that the amounts that precipitated for REEs are much higher using NH₃ than MgO, which can be due to the possible formation of MgC₂O₄(s) when MgO is used as the base/ alkali. Due to the relatively high concentration of Al in the solution, it did not precipitate.

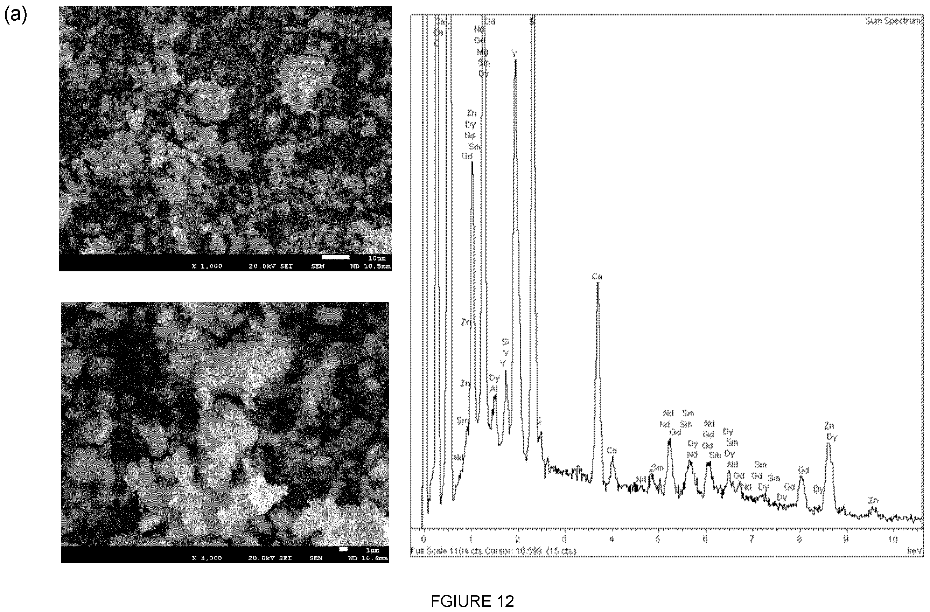

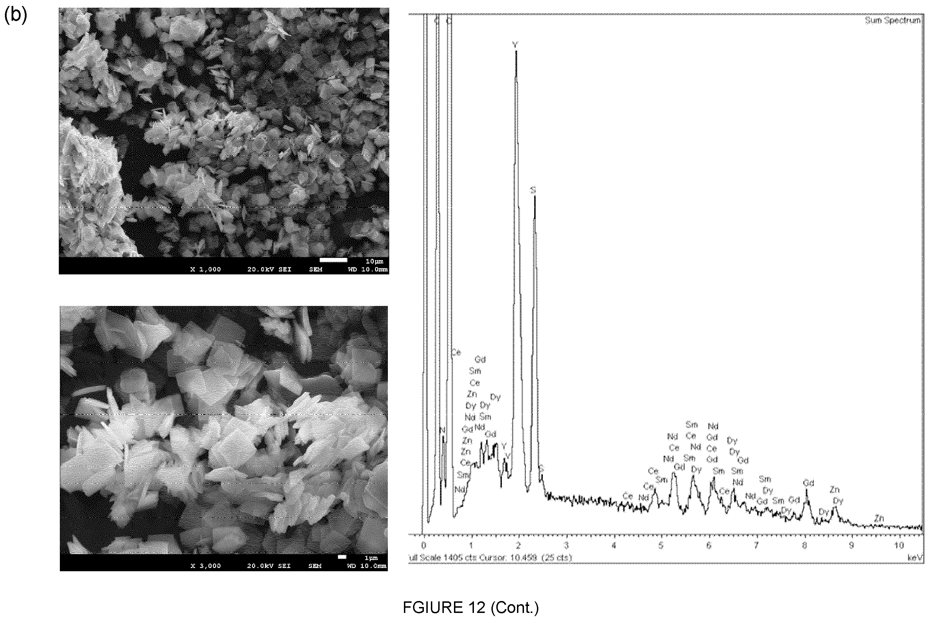

Morphology analyses were carried out using SEM (Figure 12). In both cases (wherein either MgO or NH₃ were used as base/ alkali) the presence of flat and thin oxalate crystals was observed. The spectra obtained reported the presence of a huge number of REEs. In the previous case with Fe/AI depleted AMW (see section 2.3 above), it was observed only Y, whereas in this case, Dy, Sm, Gd, Nd and Ce were also observed. The SEM analyses allowed obtaining a semi-quantitative analysis of the crystals (Table 3). Under these conditions, it can be observed that the crystals are formed by relatively small amounts of Zn (as expected). In this case, both bases/ alkalis used were present in the purified solid, but at relatively small amounts (2.4% Mg and 8.1% N when using MgO and NH₃, respectively).

**Table 3. Semi-quantitative analysis of the purified solids**

| | C | O | Mg | N | Si | S | Ca | Zn | Y | Ce | Nd | Sm | Gd | Dy |
|---|---|---|---|---|---|---|---|---|---|---|---|---|---|---|
| MgO | 21.8 | 52.6 | 2.4 | - | 0.4 | 1.0 | 0.6 | 2.3 | 8.3 | 1.0 | 2.6 | 2.2 | 2.9 | 2.0 |
| NH₃ | 20.p | 50.8 | - | 8.1 | - | 1.6 | - | 0.8 | 10.3 | 0.6 | 1.9 | 1.6 | 2.0 | 1.7 |

## Claims

1. A method for the recovery of rare earth elements (REEs) from acidic mine waters (AMWs), wherein the method comprises:
a) depleting the AMWs of alkaline earth metals of group 2, transition metals of groups 4-12, other metals of groups 13-16 and metalloids of groups 13-16;
b) extracting the REEs using a selective ligand impregnated polymeric support (SL-IPS), wherein the SL-IPS comprises an organo-phosphorus acidic extractant selected from the group consisting of an alkyl phosphinic acid, an alkyl phosphonic acid, and an alkyl phosphoric acid; and
c) eluting the REEs from the SL-IPS with a strong acid solution, at a pH between 0 and 0.5.

2. The method according to aspect 1, wherein the method comprises, after step (c), the further steps of:
d) bringing the pH of the eluate obtained in step (c) to a pH of about 0.7 - 1.3, preferably 1.0, using a base selected from the group consisting of NH3, MgO(s) and the combination thereof; and
e) precipitating the REEs in the eluate obtained in step (d) as oxalates of REEs by using oxalic acid.

3. The method according to any one of aspects 1 or 2, wherein step (a) of the method comprises the sub-steps of:
f) a1) removing iron (III) and aluminium (III) as solid metal hydroxides using a base to bring the pH of the AMWs to a pH between 4.5 and 4.8, preferably wherein the base is NaOH, optionally wherein iron (II) is pre-oxidised to iron (III) by using H₂O₂ if iron (II) is present in the AMWs;
g) a2) removing alkaline earth metals of group 2, transition metals of groups 4-12, other metals of groups 13-16 and metalloids of groups 13-16 as solid metal sulphides, by using a sulphide source selected from the group consisting of H2S, NaHS, Na2S and combinations thereof, at a pH between 2 and 2.5, optionally, providing H₂O₂ to remove the excess sulphide ions.

4. The method according to aspect 3, wherein the sulphide source in method step (a2) is NaHS, preferably wherein the NaHS is at a concentration of 66mM.

5. The method according to any one of aspects 1 to 4, wherein the method comprises, between steps (a) and (b), a further step of adjusting the depleted AMWs' pH to 4.5 with a base, preferably wherein the base is NaOH.

6. The method according to any one of aspects 1 to 5, wherein the organophosphorus acidic extractant is an alkyl phosphinic acid, preferably bis-(2,4,4-trimethylpentyl) phosphinic acid.

7. The method according to any one of aspects 1 to 6, wherein the polymeric support is cross-linked polystyrene divinyl benzene.
